(19) Europäisches Patentamt / European Patent Office / Office européen des brevets

(11) **EP 4 139 029 B1**

(12) **EUROPEAN PATENT SPECIFICATION**

(45) Date of publication and mention of the grant of the patent:
**26.11.2025 Bulletin 2025/48**

(21) Application number: **21720757.0**

(22) Date of filing: **23.04.2021**

(51) International Patent Classification (IPC):
**B01D 61/14** (2006.01)   **B01D 61/16** (2006.01)
**B01D 65/02** (2006.01)   **B01D 65/08** (2006.01)
**B01D 67/00** (2006.01)   **C01F 5/24** (2006.01)
**C01F 11/18** (2006.01)   **C02F 1/44** (2023.01)

(52) Cooperative Patent Classification (CPC):
**B01D 61/145; B01D 61/147; B01D 61/16;**
**B01D 65/02; B01D 65/08; B01D 67/0088;**
**C01F 5/24; C01F 11/181; C02F 1/444;**
B01D 2311/04; B01D 2321/04; B01D 2321/162;
B01D 2321/168; B01D 2321/281; B01D 2323/40;
(Cont.)

(86) International application number:
**PCT/EP2021/060756**

(87) International publication number:
**WO 2021/214333 (28.10.2021 Gazette 2021/43)**

(54) **SYSTEM AND PROCESS FOR MEMBRANE FOULING CONTROL USING CALCIUM AND/OR MAGNESIUM ADDITIVE**

SYSTEM UND VERFAHREN ZUR KONTROLLE DER MEMBRANVERSCHMUTZUNG UNTER VERWENDUNG VON CALCIUM- UND/ODER MAGNESIUMZUSÄTZEN

SYSTÈME ET PROCÉDÉ DE CONTRÔLE DE L'ENCRASSEMENT DES MEMBRANES À L'AIDE D'ADDITIFS À BASE DE CALCIUM ET/OU DE MAGNÉSIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2020 EP 20171118**

(43) Date of publication of application:
**01.03.2023 Bulletin 2023/09**

(73) Proprietor: **S.A. LHOIST RECHERCHE ET DEVELOPPEMENT**
**1342 Ottignies-Louvain-la-Neuve (BE)**

(72) Inventors:
• **TABATABAI, S. Assiyeh A.**
  **1190 Forest (BE)**
• **GÄRTNER, Robert Sebastian**
  **1501 Buizingen (BE)**
• **KRAMADHATI, Narahari N.**
  **La Habra, California 90631 (US)**

• **PETTIAU, Xavier**
  **6010 Couillet (BE)**

(74) Representative: **Calysta NV**
**Lambroekstraat 5a**
**1831 Diegem (BE)**

(56) References cited:
EP-A1- 1 920 821      EP-A1- 2 565 165
EP-A1- 2 662 416      WO-A1-2017/009792
CA-A1- 2 243 774      JP-A- 2017 136 570
JP-A- S57 184 430      US-A- 4 207 183
US-A1- 2014 000 485   US-A1- 2015 010 458
US-A1- 2015 159 365

**(Cont. next page)**

- **FENG BO ET AL: "Effect of various factors on the particle size of calcium carbonate formed in a precipitation process", MATERIALS SCIENCE, vol. 445-446, 1 February 2007 (2007-02-01), AMSTERDAM, NL, pages 170 - 179, XP093238916, ISSN: 0921-5093, DOI: 10.1016/ j.msea.2006.09.010**
- **DEHGHANI FARSHAD ET AL: "Performance of carbonate calcium nanoparticles as filtration loss control agent of water-based drilling fluid", SN APPLIED SCIENCES, vol. 1, no. 11, 24 October 2019 (2019-10-24), XP093238934, ISSN: 2523-3963, Retrieved from the Internet <URL:http://link.springer.com/article/10.1007/ s42452-019-1446-8/fulltext.html> DOI: 10.1007/ s42452-019-1446-8**
- **HAURIE ET AL: "Effects of milling on the thermal stability of synthetic hydromagnesite", MATERIALS RESEARCH BULLETIN, ELSEVIER, KIDLINGTON, GB, vol. 42, no. 6, 5 April 2007 (2007-04-05), pages 1010 - 1018, XP022022523, ISSN: 0025-5408, DOI: 10.1016/ J.MATERRESBULL.2006.09.020**

(52) Cooperative Patent Classification (CPC): (Cont.)
C01P 2004/51; C01P 2004/61; C01P 2004/62; C01P 2004/64; C01P 2006/12; C02F 2303/20; C02F 2305/00

## Description

## Technical Field

The present invention relates to a system and process for membrane fouling control.

## Prior art and background of the present invention

Membranes are used for water treatment in a number of industries, including municipal drinking water supply and wastewater treatment, food and beverage processes, pharmaceutical, oil&gas, and many more.

The main operational problem of membrane filtration is fouling. Foulants carried in the liquid to be filtered are deposited on the membrane and lead to a degradation of the membrane performance. There are different types of fouling. Colloidal/particulate fouling is formed by an accumulation of foulants on the membrane surface and inside the pores reducing membrane permeability. Organic fouling is caused by natural or synthetic organic matter from the source liquid. Biofouling is stemming from aquatic organisms such as bacteria or algae which can form colonies on the membrane surface and cause biofouling. Inorganic fouling or scaling is formation of hard mineral deposits on the membrane surface as supersaturation limits of sparingly soluble salts is exceeded. Therefore, most membrane applications require fouling control measures to minimize the negative impacts of fouling on membrane operation / lifetime.

It was found that fouling in each application depends largely on the feed water quality, the membrane and the operating conditions. One strategy to minimize fouling is thus the correct choice of the membrane and of the operating conditions depending on the application, i.e. depending on the type of foulants in the liquid to be filtered. However, this requires a large variety of membrane filters for handling the large variety of different fouling situations. This increases the difficulty in projecting a filter application as each application is slightly different.

Another solution against fouling is periodic cleaning of the membrane. This can be achieved by physical cleaning, biological cleaning or chemical cleaning. Physical cleaning can be gas scour, sponges, water jets or backwashing using permeate. Physical cleaning could also include some abrasive cleaning agents added in the liquid to be filtered. Chemical cleaning involves the use of chemicals, e.g. acids, bases, oxidants, enzymatic components, surfactants, complexing agents and formulated detergents to remove foulants and impurities. Chemical cleaning is normally more effective to remove fouling which cannot be removed by physical cleaning. However, chemical cleaning creates additional waste and has thus a negative environmental impact. Physical cleaning might be better for the environment but needs to be performed more often or sometimes might not be sufficient to remove the foulants from the membrane.

The mentioned membrane cleanings are also called membrane remediations, i.e. measures to re-establish the membrane functionalities after fouling has occurred.

Physical cleaning and chemical cleaning can also be combined. An example can be found in document EP1920821 using amongst other, water insoluble calcium carbonate.

A further solution is the pretreatment of the water to be filtered. The pretreatment reduces the foulants in the water to be filtered before they arrive at the membrane or changes the characteristics of the foulants in such a way as to reduce or limit their interaction with the membrane material and structure. Examples of a pretreatment are coagulation, adsorption, oxidation, magnetic ion exchange (MIEX), biological treatment or some integrated pretreatments. Normally this is achieved by adding a fouling control additive into the water to be filtered to condition the water to be filtered, i.e. to modify or reduce the amount of foulants in the water to be filtered before reaching the membrane. However, the efficiency of the pretreatment of the water depends on many factors like the type of agents (coagulant, adsorbent, flocculant, oxidizer, ...), the dosage, the dosing modes (continuous or intermittent), the dosing point, the mixing efficiency, temperature, properties of the foulants (hydrophobicity, charge density, molecular weight, and molecular size) and characteristics of the membrane (membrane charge, hydrophobicity, and surface morphology). Therefore, pretreatment methods are highly sensitive to the application conditions and need to be individually planned, optimized and monitored.

Conditioning by coagulation/flocculation is commonly used in conventional filtration technology (e.g., media filtration). The conditioning aims to prepare the liquid to be filtered to enable the correct functioning of the media filtration equipment by eliminating in particular the problems of media bed clogging and surface cake formation or filter blinding.

Although membrane technologies were originally designed as a higher performing and chemical-free alternative to conventional filtration technology, practical experience shows that various pretreatment processes (including physico-chemical processes) may be required to ensure stable membrane operation. Consequently, coagulation was adopted also as fouling control with a pretreatment of the water to be filtered through the membrane. A coagulation additive is added to the water to be filtered to promote the aggregation of foulants into larger flocs to reduce or eliminate blocking of the membrane pores. However, pin-sized flocs were deemed sufficient as the membrane pores are 2-3 orders of magnitude smaller than the pores in conventional filtration technology. Coagulants can be organic or mineral. Mineral coagulants are for example aluminum or iron salts. Coagulation is now the most widely used fouling control chemical in membrane-based water treatment systems. The coagulant acts here as the fouling control additive.

One problem of the coagulant is that unreacted coagulants can reach the membrane and react on the surface of the membrane or even in the membrane porous structure. Membranes may suffer from fiber plugging due to high coagulant use, or pore blocking by smaller monomers, dimers, and trimers of the hydrolyzing metal coagulant. So, the coagulant could become a source of fouling instead of solving the fouling. Fouling by $Fe^{2+}$ and $Mn^{2+}$ may also occur with coagulants of low grade. Fouling by iron requires a specifically tailored and intensive cleaning protocol to recover permeability. In addition, water generated from periodic membrane cleaning that contains the spent coagulant can have an environmental impact if disposed back directly to the environment without adequate treatment.

While the above-described pretreatment measures condition the water to be filtered to control the fouling, it is also known to condition the membrane. For example, WO2001027036A1 and WO2002044091A2 disclose a filtration aid which is added in each filter cycle into the water to be filtered for conditioning the membrane. The filtration aid added in the water to be filtered contains fouling control particles which form a deposit layer on the membrane due to the permeate flux. The deposit layer protects the membrane from fouling by retaining the foulants in the deposit layer. At the end of each cleaning cycle, the deposit layer with the retained foulants is cleaned from the membrane, e.g. by backwashing. Ion-exchange resin particles and suspensions of iron hydroxides, of aluminum oxides and hydroxides, of sintered iron oxide particles, of pulverized activated carbon, of clay particles and of other mineral particles are proposed as membrane fouling control additive. It is suggested to use fouling control particles with a size between 0.5 and 20 micrometer ($\mu$m). However, all materials suggested for the fouling control particles had severe side effects like being reactive, being abrasive, being toxic or environmentally not desirable which caused damages in the membrane, pumps and/or caused problems with the handling of the wastewater created by the cleaning. Consequently, this technology has not found application at industrial scale.

A similar system with the described membrane fouling control additive is also described in WO2017009792A1. In addition, it is suggested to have a stimuli responsive layer on the membrane and reactive fouling control particles such that the dynamic protective layer formed by the fouling control particles remains attached to the stimuli responsive layer even during the cleaning step until a stimulus is created with the stimuli responsive layer to remove the fouling control particles. It is suggested to use fouling control particles with a particle size smaller than 1 $\mu$m, preferably between 100 and 200 nanometer. This technology might lead to some reduced amount of fouling control particles needed. It did however not solve the problems of the fouling control particles proposed being reactive and/or abrasive and/or being environmentally not desirable. The stimuli responsive layer creates an additional process step associated with increased cost and complexity of the proposed solution, including waste handling and disposal.

## Brief summary of the invention

It is therefore the object of this invention to provide a system and a process for membrane fouling control which avoids the disadvantages of the state of the art and/or which is provided for an easy and efficient membrane fouling control.

According to the invention, this object is solved by a process for membrane fouling control comprising the steps of: Conducting/filtering a liquid to be filtered through a membrane; and adding fouling control particles upstream of the membrane and/or into the liquid to be filtered to form a dynamic protective layer directly against the membrane. The process is characterized by one or more of the subsequent embodiments.

Further, According to the invention, this object is also solved by a system for membrane fouling control comprising: a first conduct portion; a second conduct portion; a membrane arranged between the first conduct portion and the second conduct portion and/or configured to filter a liquid by conducting it from the first conduct portion to the second conduct portion; and a fouling control means filled with fouling control particles and/or configured for adding the fouling control particles in the first conduct portion, wherein the fouling control particles and/or the fouling control means is configured such that a dynamic protective layer is formed on the membrane by the fouling control particles added by the fouling control means for protecting the membrane from foulants. The system is characterized by one or more of the subsequent embodiments.

According to the invention, this object is further solved by a calcium and/or magnesium additive (for membrane fouling control) comprising particles for forming a dynamic protective layer on the membrane for fouling control of the membrane, when added in the liquid flowing through the membrane.

The calcium and/or magnesium additive (for membrane fouling control) is characterized in that the particles comprise synthetic mineral precipitate particles based on calcium and/or magnesium chosen amongst ultrafine synthetic mineral precipitate particles based on calcium and/or magnesium having a particle size distribution $d_{50}$ lower than or equal to 1 $\mu$m, $d_{90}$ lower than or equal to 10 $\mu$m and a $d_{10}$ comprised between 50 nm and 500 nm and microfine synthetic mineral precipitate particles based on calcium and/or magnesium having a particle size distribution $d_{50}$ lower than or equal to 5 $\mu$m, $d_{90}$ lower than or equal to 15 $\mu$m and a $d_{10}$ comprised between 200 nm and 3 $\mu$m.

Accordingly, the additive according to the present invention is a synthetic mineral precipitate based on calcium and/or magnesium having strictly controlled particle size distribution showing adequacy with the membrane fouling control application in that the membrane permeability was nearly completely restored after each cleaning of the dynamic protective layer while not being detrimental to the membrane. The calcium and/or magnesium additive according to the present invention is able to permit high initial liquid flow, provide pore space to trap and contain the foulants and do / does not adversely affect the membrane permeability, especially due to the fact that the particle size distribution of synthetic mineral precipitate based on calcium and/or magnesium is tailored to create coating layers that provide highest flow rates through the membranes but also having properties at the layer level.

According to the present invention, the particle size distribution (PSD) is measured according to the standard ISO13320:2020(E), item 5 by laser light scattering (commonly also called laser diffraction) of the calcium and/or magnesium additive dispersed in water. Preferably, the PSD is analyzed/measured for the range smaller than 0,4 $\mu$m by laser light scattering using light at 450 nm, 600 nm, 900 nm with two polarizations for each wavelength and for the range equal to and larger than 0,4 $\mu$m by a laser of 780 nm wavelength. The PSD is generated by a Mie Diffraction model, according to the standard ISO13320:2020(E), item 5. Water is used as dispersion liquid. Sonication is used to reach complete dispersion of the calcium and/or magnesium additive in the water before the measurement with the laser diffraction. In the used measurement method for obtaining the PSD below 0.4 $\mu$m, a white light emitting diode (LED) is used with three different filters to obtain the light measurement at the three wavelengths 450 nm, 600 nm, 900 nm and with two polarizers to obtain for each of the three wavelengths two (orthogonal) polarizations (resulting in a total of six light measurements). In the used measurement method for obtaining the PSD at and above 0.4 $\mu$m, laser light at 780 nm (red laser) is used. For the red laser, no polarizers are used. The PSD for the range below 0.4 $\mu$m is generated by the Mie Diffraction model based on the six measurements resulting from the three wavelength measurements at 450 nm, 600 nm, 900 nm each measured with two orthogonal polarizations. The PSD for the range at and above 0.4 $\mu$m is generated by the Mie Diffraction model based on the measurement with the red laser.

The values $d_y$ of a particle size distribution, as explained below, refers to the size at which y% of the distribution is below the size $d_y$. The values $d_y$ in this application refer to a number-based particle size distribution meaning that y% of the number of particles are below $d_y$ and/or (100%-y%) of the number of particles are above $d_y$ (neglecting the particles exactly at $d_y$). The values $d_y$ of a particle size distribution are determined from the PSD determined by laser light scattering as explained above.

Synthetic mineral precipitate based on calcium and/or magnesium are mineral precipitates for which the manufacturing is controlled to reach specific feature in the synthetic precipitate such as the particle size distribution, the BJH porosity and BET specific surface area. Such synthetic mineral precipitate distinguishes typically over naturally occurring mineral precipitate by the constraints applied during the manufacturing process yielding typically to a narrower particle size distribution for the synthetic mineral precipitate since the process is controlled while naturally occurring mineral precipitate have typically a very broad particle size distribution since crystallization is not performed under constraints and most often quite slow.

Synthetic mineral precipitate particles are for example disclosed in US20150044469 or in US20180170765.

The process and/or system is characterized by one or more of the following embodiments.

According to the present invention, the fouling control particles are mineral precipitates. Precipitate particles, in particular the family of mineral precipitate particles allows to tune the properties of the fouling control particles like their size or size distribution during the manufacturing.

According to the present invention, the calcium and/or magnesium particles comprise synthetic mineral precipitates based on calcium and/or magnesium carbonate. According to the invention, the calcium and/or magnesium particles are synthetic mineral precipitates based on calcium and/or magnesium carbonate. Preferred examples of this family are precipitated calcium carbonate and precipitated hydromagnesite. This is a versatile mineralbased material that can be tuned in terms of morphology, particle size and polydispersity to provide a range of functionalities for different applications. For the purpose of membrane fouling control, we found a surprisingly good effect with this material, whereby membrane permeability was nearly completely restored after each cleaning of the dynamic protective layer. In addition, this material is not detrimental to the membrane material or other system components (not abrasive, not corrosive) and does not pose an environmental hazard (can be disposed of with minimal handling). Ultrafine and/or microfine precipitated calcium carbonate or/and precipitated hydromagnesite is/are chemically inert and is/are able to form high porosity filter cakes that permit high initial liquid flow, provide pore space to trap and contain the foulants and do / does not adversely affect the membrane permeability. Particle size distribution of precipitates of this material can be tailored to create coating layers that provide highest flow rates through the membranes.

In one embodiment, the fouling control particles are composite particles (made of a composition) of a first material and a second material. The composite particles comprise preferably a core of the first material and a shell of the second material. The first material is preferably a mineral and/or a mineral precipitate, preferably a calcium-based mineral (precipitate), preferably a calcium carbonate, preferably mainly calcite with a minor portion of aragonite. The second material is preferably a mineral and/or a mineral precipitate, preferably a magnesium-based mineral (precipitate), preferably a hydromagnesite, preferably hydromagnesite with (some traces of) nesquehonite. These composite particles can be easily tuned in size based on the material of the core and/or of the first material and/or can be easily functionalized based on the material of the shell and/or of the second material. This allows to functionalize the dynamic protective layer, e.g. for improving the adhesion of the foulants to the dynamic protective layer, and thus further improve the filter function of the dynamic protective layer. The shell material has preferably different properties than the core material and would absorb different kind of foulants and to different surfaces. In addition, the shell material can be porous, allowing absorption into the pores, which keeps the spaces (pores) between the particles open. On the other side, this group of composite particles are environmentally much more compatible than the reactive fouling control particles used in the state of the art.

In one embodiment, the fouling control particles are inert. Within the meaning of the present invention, the term "inert" means that the fouling control particles do not change their properties in the dynamic protective layer on the membrane during the operation mode. In the state of the art, only reactive fouling control particles were suggested to react with the foulants. This has a negative effect on the environment and needs special waste treatment. Often the reactive fouling control particles are also aggressive to the membrane and other system equipment like pumps, e.g. abrasive or corrosive.

In one embodiment, the fouling control particles are reactive or functionalized. Within the meaning of the present invention, the terms "reactive or functionalized particles" means preferably that the surface of the fouling control particles have specific charges or groups which absorb foulants and/or which attach to the membrane surface.

According to the present invention, the synthetic mineral precipitate particles based on calcium and/or magnesium have a polydispersity value greater than or equal to 0.1 and/or smaller than or equal to 1.5. Preferably, the polydispersity value is larger than or equal to 0.2, preferably larger than or equal to 0.3, preferably larger than or equal to 0.4, preferably larger than or equal to 0.5. Preferably, the polydispersity value is smaller than or equal to 1.4, preferably smaller than or equal to 1.2, preferably smaller than or equal to 1.1, preferably smaller than or equal to 1.0. Preferably, the ultrafine synthetic mineral particles have a polydispersity value comprised in the range 0.3 to 1.2, preferably between 0.5 to 1.0. Preferably, the microfine synthetic mineral particles have a polydispersity value comprised in the range 0.7 to 1.5, preferably between 0.9 to 1.3. The polydispersity value of the synthetic mineral precipitate particles according to the present invention allows to characterize the distribution width (also sometimes referred to a certain polydispersity of the population of the particles in the mineral precipitate particles) considered between the particle size $d_{90}$ and $d_{10}$ divided by the $d_{50}$ particle size preferably larger than or equal to 0.1, preferably larger than or equal to 0.15, preferably larger than or equal to 0.2. The polydispersity value of the calcium and/or magnesium particles is preferably smaller than or equal to 1.5, preferably smaller than or equal to 1.2, preferably smaller than or equal to 1.0, preferably smaller than or equal to 0.8, preferably smaller than or equal to 0.6, preferably smaller than or equal to 0.4, preferably smaller than or equal to 0.35, preferably smaller than or equal to 0.3, preferably smaller than or equal to 0.25. By the terms "polydispersity value", it is meant, within the meaning of the present invention the distribution width between $d_{90}$ and $d_{10}$ divided by the $d_{50}$. The polydispersity value is calculated according to the formula below:

$$polydispersity\ value = \frac{d90 - d10}{d50},$$

where $d_{90}$, $d_{10}$, $d_{50}$ values are the $d_{90}$, $d_{10}$, $d_{50}$ of the synthetic mineral precipitate particles based on calcium and/or magnesium. As defined above, the $d_{90}$, $d_{10}$, $d_{50}$ are obtained from a number-based distribution. Such polydispersity value obtained from number-based distributions is used to characterize the narrow particle size distribution of the synthetic mineral precipitate particles according to the present invention and is disclosed in literature. Even if polydispersity value can also be obtained from volume-based distribution, the polydispersity value calculated according to the present invention is obtained from number-based distribution. It has indeed been realized that the polydispersity value plays a significant role in the formation of the dynamic protective layer by fouling control particles, because of the risk of pore blockage by too fine fouling control particles on the one hand and poor and inhomogeneous membrane coverage by large fouling control particles on the other hand.

In one embodiment, the fouling control particles have an absolute value of the zeta potential smaller than 50 mV, preferably than 45 mV, preferably than 40 mV. This has the advantage that the fouling control particles can form a sacrificial layer, i.e. a layer that can be easily detached from the membrane. In one embodiment particles have a positive zeta potential smaller than or equal to 50 mV, preferably smaller than or equal to 45 mV, preferably smaller than or equal to 40 mV. In another embodiment, the particles have a negative zeta potential greater than -50 mV, preferably greater than or equal to -45 mV, preferably greater than or equal to -40 mV.

According to the present invention, the zeta potential of the particles was measured according to the following experimental procedure. The suspensions of synthetic mineral precipitate particles have been subjected to a magnetic agitation for 30 minutes, before each zeta potential measurement. The suspensions have been then subjected to a dispersion step during 30 seconds with an ultrasound sonication probe Hielscher-UP4005 (with an amplitude of 50% and a cycle of 0.5) followed by a further magnetic agitation during 30 minutes before a new series of measurements. The zeta potential measurements have been performed with electroacoustic spectrometer DT-1200 (Dispersion Technology). The electroacoustic probe for measuring the zeta potential was calibrated with a colloidal silica suspension showing a zeta potential of -38 ($\pm$1) mV. For each sample, 5 zeta potential measurements are realized.

According to the present invention, the fouling control particles have a specific surface area measured by nitrogen adsorption manometry and calculated according to the BET method larger than or equal to 15 $m^2/g$, preferably larger than or equal to 20 $m^2/g$. This results in a better deposition on the membrane surface as well as larger affinity for foulants capture from the liquid to be filtered.

In one embodiment, the Scherrer diameter of the fouling control particles are larger than 20 nm, preferably than 30 nm, preferably than 40 nm, preferably than 50 nm, preferably than 60 nm. In one embodiment, the Scherrer diameter of the fouling control particles are smaller than 150 nm, preferably than 140 nm, preferably than 130 nm, preferably than 120 nm, preferably than 110 nm, preferably than 100 nm. Preferably, the Scherrer diameter of the fouling control particles are between 50 nm and 100 nm. The Scherrer diameter indicates the mean size of the ordered (crystalline) domains and is calculated according to the Scherrer equation, preferably based on measurements with X-ray diffraction.

X-ray powder diffraction (XRD) is an analytical technique used for phase identification and crystals size (Scherrer Diameter) of a crystalline material. Diffraction is based on generation of X-rays in an X-ray tube. These X-rays are filtered and collimated in order to produce a concentrated monochromatic radiation, which is directed towards the sample. This analysis is performed using a Bruker - D8 advance instrument. Copper K-a is an x-ray energy frequently used on lab-scale x-ray instruments. The energy is 8.04 keV, which corresponds to an x-ray wavelength of 1.5406 Å.

In crystalline materials, the scattered X-rays undergo constructive and destructive interferences. This process of diffraction is described by Bragg's Law ($n\lambda$=2d sin $\theta$). The diffracted X-rays are detected, processed, and counted.

As the directions of possible diffractions depend on the size and shape of the crystals composing the sample and the intensities of the diffracted waves depend on the kind and arrangement of atoms in the crystal structure, this method enables to determine the chemical composition of a sample. By applying Scherrer's equation to peak broadening for a crystal structure, it is also possible to determine the size of crystals in the sample.

Typically, we would use the Lorentz fit (for the diffraction peak) to calculate the Scherrer diameter and we apply this to the peaks at ca. 29.45°, *39.46°* and 43.21° of the diffraction pattern.

In one embodiment, the fouling control particles and/or the additive is under the form of a slurry with a solids content and/or a fouling control particles content preferably lower than or equal to 20 wt%, preferably lower than or equal to 15 wt%, preferably lower than or equal to 12 wt%, preferably lower than or equal to 11 wt%, preferably lower than or equal to 10 wt%. In one embodiment, the fouling control particles and/or the additive is in a form of a slurry with a solids content and/or a fouling control particles content preferably greater than or equal to 1 wt%, preferably greater than or equal to 1.5 wt%, preferably greater than or equal to 3 wt%, preferably greater than or equal to 5 wt%, preferably greater than or equal to 6 wt%, preferably greater than or equal to 7 wt%. The higher the solid content of the fouling control particles, the less volume and weight the additive and/or the fouling control particles require for storage and transport.

In one embodiment, the ultrafine synthetic mineral precipitate particles based on calcium and/or magnesium having a particle size distribution $d_{50}$ lower than or equal to 1 $\mu$m, $d_{90}$ lower than or equal to 10 $\mu$m and a $d_{10}$ comprised between 50 nm and 500 nm. The ultrafine mineral precipitate particles according to the present invention are particularly suitable for ultrafiltration.

In one embodiment, the microfine synthetic mineral precipitate particles based on calcium and/or magnesium having a particle size distribution $d_{50}$ lower than or equal to 5 $\mu$m, $d_{90}$ lower than or equal to 15 $\mu$m and a $d_{10}$ comprised between 200 nm and 3 $\mu$m. The microfine mineral precipitate particles according to the present invention are particularly suitable for microfiltration.

Typically, according to the present invention, the $d_{10}$ of the particle size distribution of the calcium and/or magnesium particles is larger than a defined pore size of the membrane. Preferably, the $d_{10}$ of the size distribution of the fouling control particles is 3 times, preferably five times, preferably seven times preferably nine times, preferably ten times larger than the defined pore size. It is shown that the selection of the lower size limit of the calcium and/or magnesium particles dependent on the defined pore size of the membrane increases significantly the performance of the fouling control method. The calcium and/or magnesium particles are selected larger than the defined pore size of the membrane so that the calcium and/or magnesium particles cannot enter the membrane and the narrowing of the pores of the membrane is avoided. This explains likely the positive effect of this measure. In the state of the art, only the average particle size was controlled and the average particle size was not selected depending on the membrane defined pore size. This explains the limited performances of the membrane fouling control by the fouling control particles forming a dynamic protective layer on the membrane of the state of the art. In addition, the fact that in the fouling control particles of the state of the art only the average particle size was controlled neglected the often very large size distributions of the fouling control particles in those small dimensions which lead for average particle sizes above the defined pore size still to a large amount of fouling control particles below the defined pore size leading therefore still to a narrowing of the pores. This measure is particularly advantageous with the subsequent embodiment.

In one embodiment, depending on the microfiltration membrane, the $d_{90}$ of the size distribution of the calcium and/or magnesium particles is lower than or equal to 15 $\mu$m, preferably lower than or equal to 10 $\mu$m, preferably lower than or equal to 5 $\mu$m, preferably lower than or equal to 1 $\mu$m, preferably lower than or equal to 0.7 $\mu$m, preferably lower than or equal to 0.5 $\mu$m.

In one embodiment, depending on the ultrafiltration membrane, the $d_{90}$ of the size distribution of the calcium and/or magnesium particles is lower than or equal to 10 $\mu$m, preferably lower than or equal to 5 $\mu$m, preferably lower than or equal to 1 $\mu$m, preferably lower than or equal to 0.7 $\mu$m, preferably lower than or equal to 0.5 $\mu$m.

It is shown that the main influence of the upper size limit of the calcium and/or magnesium particles for the performance of the fouling control method is the homogeneity of the deposition of the calcium and/or magnesium particles. The homogeneity depends mainly on the absolute particle size and less on the dependence on the defined pore size of the membrane. The above-mentioned upper size limits have been proved to significantly reduce the heterogeneity of the deposited calcium and/or magnesium particles leading thus to a high performance dynamic protective layer on the membrane. As already mentioned above, it was further found out that it is not only important to select the average particle size, but more important to select the $d_{90}$ of the size distribution of the calcium and/or magnesium particles. There might be also some effects of the upper limit of the particle size which depend on the defined pore size like full blocking of the pores. However, it was shown that these defined pore size dependent effects have a reduced influence compared to the mentioned homogeneity which depends on the absolute size of the particles.

In a preferred embodiment, the $d_{10}$ of the particle size distribution of the calcium and/or magnesium particles is chosen depending on the defined pore size, while the $d_{90}$ of the size distribution of the calcium and/or magnesium particles is chosen as an absolute value. This combination significantly improved the performance of the membrane fouling control compared to the ones known in the state of the art.

In one embodiment, the $d_{10}$ of the particle size distribution of the calcium and/or magnesium particles for ultrafiltration is greater than or equal to 50 nm, preferably greater than or equal to 70 nm, preferably greater than or equal to 100 nm, preferably greater than or equal to 200 nm.

In one embodiment, the $d_{10}$ of the particle size distribution of the calcium and/or magnesium particles for ultrafiltration is lower than or equal to 500 nm, preferably lower than or equal to 400 nm, preferably lower than or equal to 350 nm, preferably greater than or equal to 320 nm.

In one embodiment, the $d_{10}$ of the particle size distribution of the calcium and/or magnesium particles for microfiltration is greater than or equal to 200 nm, preferably greater than or equal to 250 nm, preferably greater than or equal to 300 nm, preferably greater than or equal to 500 nm.

In one embodiment, the $d_{10}$ of the particle size distribution of the calcium and/or magnesium particles for microfiltration is lower than or equal to 1000 nm, preferably lower than or equal to 900 nm, preferably lower than or equal to 800 nm, preferably lower than or equal to 750 nm.

In one embodiment, the process comprises the further step of forming the calcium and/or magnesium particles in situ and/or the fouling control means comprises a fouling control particle forming means for forming the fouling control particles in situ or in the fouling control means. The fouling control particles are preferably formed before adding the fouling control particles into the liquid to be filtered.

The calcium and/or magnesium particles are preferably formed by a physical action and/or a chemical reaction. The chemical reaction uses preferably at least one raw material or substance, preferably at least two raw material or substances to obtain by the chemical reaction the calcium and/or magnesium particles. The chemical reaction is preferably a precipitation. The chemical reaction is preferably a carbonation, preferably a carbonation of calcium hydroxide and/or magnesium hydroxide. Preferably, precipitated calcium carbonate is obtained by the chemical reaction. By producing the calcium and/or magnesium particles in situ, some stability problems of the size distribution of some calcium and/or magnesium particles can be reduced, the raw materials used for the chemical reaction might be easier to handle and process. The physical action can be a size reduction action and/or a classification.

According to the present invention, in the process according to the present invention, the dynamic protective layer is formed directly against the membrane.

In the process according to the present invention, the dynamic protective layer formed on the membrane is a porous layer which allows the liquid to pass through to the membrane and which retains the foulants.

In one embodiment, in the process according to the present invention, the dynamic protective layer is formed and/or maintained on the membrane by a transmembrane pressure generated across the membrane as a result of conducting the liquid to be filtered through the membrane and/or by the permeate flux, i.e. by the permeation drag or the hydraulic force that transports the particles to the membrane surface.

In one embodiment, the process according to the present invention comprises the further step of and/or the system according to the present invention is configured for cleaning the dynamic protective layer with the filtered/retained foulants from the membrane.

In one embodiment, the process according to the present invention performs a plurality of filter cycles and/or the system according to the present invention is configured to perform a plurality of filter cycles. One or more or all filter cycles of the plurality of filter cycles comprise:

- Adding the fouling control particles into the liquid to be filtered for forming the dynamic protective layer on the membrane;
- filtering the liquid to be filtered conducted through the membrane while the foulants are retained by the dynamic protective layer; and cleaning the dynamic protective layer with the retained foulants from the membrane.

In the process according to the present invention, the membrane fouling control additive is a calcium and/or magnesium additive as described above.

In one embodiment, the membrane of the process according to the present invention and/or of the system according to the present invention is a microfiltration membrane or ultrafiltration membrane.

In one embodiment, in the process according to the present invention, said liquid conducted through the membrane is an aqueous liquid, preferably municipal wastewater, seawater, industrial process water and industrial wastewater, source water for municipal drinking water, brackish water, fresh ground water, fresh surface water.

In one embodiment, in the process according to the present invention, the calcium and/or magnesium particles added into the liquid to be filtered are forming a dynamic protective layer on the membrane such that, when the liquid to be filtered contains foulants, the foulants are retained in the dynamic protective layer before the liquid to be filtered is conducted through the membrane.

Other embodiments according to the present invention are mentioned in the appended claims, the subsequent description of

## Brief description of the Drawings

Figure 1 shows a system for fouling control.
Figure 2 shows a step of a method for fouling control of introducing a membrane fouling control additive in a liquid to be filtered.
Figure 3 shows a step of the method for fouling control of forming a dynamic protective layer on the membrane.

Figure 4 shows a step of the method for fouling control of retaining foulants in the dynamic protective layer.
Figure 5 shows a step of the method for fouling control of cleaning the dynamic protective layer from the membrane.
Figure 6 shows an embodiment of a size distribution of the calcium and/or magnesium particles.
Figure 7 shows an idealized membrane with the fouling control particles of a first size.
Figure 8 shows the idealized membrane with the fouling control particles of a second size.
Figure 9 shows the pressure over different filtration cycles for a membrane fouling control using coagulants.
Figure 10 shows the pressure over different filtration cycles for a membrane fouling control using precipitated calcium carbonate as fouling control particles.
Figure 11 show a translation table for the defined pore size and the MWCO.
Figure 12 shows the pressure over different filtration cycles for a membrane fouling control once using precipitated calcium carbonate as fouling control particles and once using no fouling control particles.

In the drawings, the same reference numbers have been allocated to the same or analogue element.

## Detailed description of an embodiment of the invention

Other characteristics and advantages of the present invention will be derived from the non-limitative following description, and by making reference to the drawings and the examples.

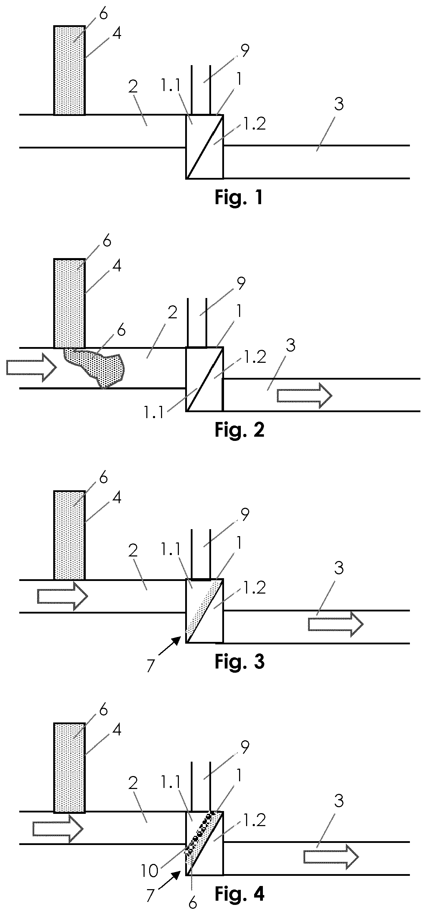

Fig. 1 shows a system for membrane fouling control comprising a membrane 1, a first conduct portion 2, a second conduct portion 3 and a fouling control means 4. Preferably, the system comprises further a cleaning outlet 9 and/or cleaning outlet control means.

The system for membrane fouling control is configured to filter a liquid to be filtered through a membrane 1 to obtain a filtered liquid while controlling the fouling of the membrane 1. The application of the system for membrane fouling control can be in municipal drinking water applications, municipal wastewater applications, applications for desalination or reuse of water, applications for industrial wastewater like oily waters, sludge, waters with chemical substances, etc. However also in industrial process water like in the beverage industry the present system can be applied.

The liquid to be filtered is the liquid in the first conduct portion 2 or the liquid which is in the operation mode upstream of the membrane 1. The filtered liquid is the liquid in the second conduct portion 3 or the liquid which is downstream of the membrane 1 in the operation mode. The filtered liquid obtained by the liquid to be filtered conducted through the membrane 1 is also called the permeate. The liquid to be filtered and the filtered liquid is normally a water-based liquid (aqueous liquid). However, it is also possible that the liquid to be filtered is not a water-based liquid, but another liquid.

The liquid to be filtered is normally a liquid including contaminants (contaminated liquid). The contaminants are intended to be filtered out by the membrane 1. The filtered liquid is the liquid with a reduced amount of contaminants, preferably substantially depleted from the contaminants. Of course, it is also possible that the liquid to be filtered is a clean liquid, i.e. a liquid without contaminants. This can be for certain operation modes or because simply the liquid to be filtered is not always contaminated. The liquid to be filtered is normally a water-based liquid (aqueous liquid), i.e. a contaminated water or water with contaminants and the filtered liquid is normally a clean water or a water with a reduced amount of contaminants, preferably free of contaminants. The contaminated water could be a water source for municipal drinking water and/or the filtered liquid could be the municipal drinking water or a preprocessed municipal drinking water. The contaminated water could be a wastewater, like municipal wastewater with biological or other contaminants or like industrial wastewater with chemical, mineral or other contaminants, or like sludge and/or the filtered water could be filtered wastewater or clean water. The contaminated water could be salt or seawater with the contaminants being salts, minerals and/or biological contaminants. The contaminated water could be industrial process water.

The contaminants are normally undesired particles in the liquid to be filtered and the filtered liquid (also called permeate) is the desired product of the membrane process. However, in some applications, the contaminants retained by the membrane 1 or the retentate, i.e. the liquid with the retained contaminants, could be the desired product of the process. The contaminants are preferably particles which can and/or should be retained by the membrane 1.

The liquid to be filtered contains further foulants 10. Foulants are contaminants which create membrane fouling. The foulants can be in a solid form (fouling particles) in the liquid to be filtered and/or can be in a dissolved form in the liquid to be filtered. Different types of foulants 10 and different types of membrane fouling were already described in the introduction and are not repeated here. All or some foulants 10 can be contaminants. All or some contaminants can be foulants 10. This depends on the application, the liquid to be filtered, the membrane 1 and the process conditions. The subsequent description focuses mainly on the foulants 10 without specifying, if the foulants are contaminants or not.

The membrane 1 is configured to filter contaminants out of the liquid to be filtered to obtain the filtered liquid, when the liquid to be filtered traverses the membrane 1. The filtering of the contaminants means that the amount of contaminants in the filtered liquid is smaller than the amount of contaminants in the liquid to be filtered, preferably reduced by more than 50%, preferably by more than 60%, preferably more than 80%, preferably more than 90%. Most preferably all contaminants are retained by the membrane 1, when the liquid to be filtered traverses the membrane 1. The membrane 1 has a first side 1.1 and a second side 1.2. The first side 1.1 is connected with the second side 1.2 through pores 5 of the membrane 1. The first side 1.1 provides the membrane surface of the membrane 1. The first side 1.1 or the membrane surface is provided depending on the design of the membrane 1 by tubes, hollow fibers or other geometries.

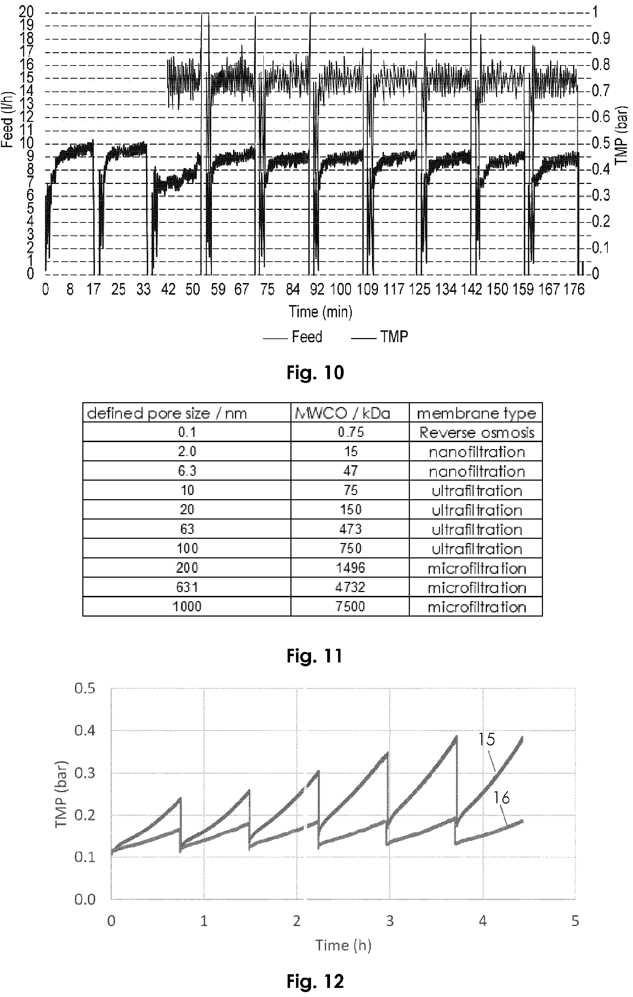

The membrane 1 has preferably a defined pore size defining the retaining capability of a membrane 1. The defined pore size is a value resulting from the pore size distribution of the pores of the membrane 1 and/or resulting from the particle size for which particles with this particle size are retained at a certain percentage X %. An example of a pore size resulting from the pore size distribution is the pore size most common in the distribution or the average pore size or the $d_{90}$ of the pore size distribution. $d_z$ of a size distribution refers to the size at which z% of the distribution is below the size $d_z$. In some membranes 1, the defined pore size of a membrane 1 refers to a particle size for which the particles are retained by the membrane 1 (with a certain likelihood). The defined pore size of a membrane 1 refers preferably to a particle size at which X % of the particles of this particle size are retained. The percentage X is preferably larger than or equal to 50%, preferably larger than 60%, preferably than 70%, preferably than 80%. A preferred definition of the defined pore size is X being 90%. Some membranes 1 define the defined pore size as a molecular weight cut-off (MWCO) with units in Dalton (Da). It is defined as the minimum molecular weight of a globular molecule that is retained to 90% by the membrane 1. The MWCO can be converted for the purpose of the invention to the defined pore size according to the table shown in Fig. 11. The second column shows the MWCO in kilo Dalton (kDA) and the first column show the corresponding translated defined pore sizes in nanometer (nm). The third column shows the corresponding type of the membrane: Reverse osmosis, nanofiltration, ultrafiltration and microfiltration. Any MWCO value of a membrane 1 can be translated into its corresponding defined pore size of the membrane 1 according to the invention by a linear interpolation of the next bigger MWCO value and the next smaller MWCO value. This translation method might not always be very precise, but is sufficient for the current invention to define clearly a defined pore size of a membrane 1 based on its MWCO value, if the membrane 1 is defined by its MWCO value instead of its pore size.

The invention is particularly advantageous for membranes 1 with pore sizes larger than 5 nm, preferably larger than 10 nm, preferably larger than 50 nm, in some embodiments larger than 100 nm. The invention is particularly advantageous for membranes 1 with pore sizes smaller than 50 $\mu$m, preferably smaller than 20 $\mu$m. The

membrane 1 is preferably a microfiltration membrane or an ultrafiltration membrane. A microfiltration membrane is considered a membrane with a pore size between 150 nm and 20 μm. An ultrafiltration membrane is considered a membrane with a pore size between 5 nm and 150 nm. However, the invention is not limited to those pore sizes and could also be applied to other membrane types, maybe larger nanofiltration membrane pore sizes. In a preferred embodiment, the membrane 1 is not suitable for removing monovalent and/or divalent ions.

The membrane 1 can be any membrane type like monoliths, tubular, flat sheet (plate, frame or spiral wound), hollow fibre or any other membrane type. The membrane 1 can be of any material like ceramics, polymers or others. The membrane 1 shown in Fig. 1 is arranged in a dead-end configuration. The membrane 1 can however also be arranged in a crossfiltration configuration. The membrane works preferably with a low-pressure membrane technology.

The first conduct portion 2 is configured to store or conduct the liquid to be filtered such that it can be conducted through the membrane 1. The first conduct portion 2 has therefore a contact surface with the first side 1.1 of the membrane 1. The first conduct portion 2 can be a vessel, a tube, a tank or any other liquid storing or conduct means. The first conduct portion 2 can comprise a pump to create a transmembrane pressure between the first side 1.1 of the membrane 1 and the second side 1.2 of the membrane 2 and/or to transport the liquid to be filtered to the membrane 1 and/or to create a hydraulic force that transports the liquid to be filtered to the membrane surface. The created liquid flow is preferably perpendicular to the membrane surface. The transmembrane pressure is the resultant pressure formed in the system from the flow through the membrane according to Darcy's law. The first side 1.1 and second side 1.2 of the membrane 1 are not necessarily in geometrical terms, but rather in functional terms of the membrane 1.

The second conduct portion 3 is configured to store or conduct the filtered liquid. The liquid to be filtered flows thus through the membrane 1 to become the filtered liquid and enters the second conduct portion 3. The second conduct portion 3 has therefore a contact surface with the second side 1.2 of the membrane 1. The second conduct portion 3 can be a vessel, a tube, a tank or any other liquid storing or conducting means. The second conduct portion 3 can comprise a pump to transport the filtered liquid away from the membrane 1 and/or to create a transmembrane pressure between the first side 1.1 of the membrane 1 and the second side 1.2 of the membrane 1.

The system or the first conduct portion 2, the membrane 1 and/or the second conduct portion 3 is/are preferably configured (in the operation mode) to create a transmembrane pressure or liquid flow which conducts the liquid to be filtered from the first conduct portion 2 through the membrane 1 to the second conduct portion 3 to become the filtered liquid. The transmembrane pressure can be achieved by a pump in the first conduct portion 2 or in the second conduct portion 3. The transmembrane pressure or the liquid flow can also be created by gravity or by any other force on the liquid. In some embodiment, the system or the first conduct portion 2, the membrane 1 and/or the second conduct portion 3 is/are preferably configured (e.g. in the cleaning mode) to create a reverse transmembrane pressure or a reverse liquid flow which conducts the filtered liquid or the liquid in the second conduct portion 2 through the membrane 1 into the first conduct portion 2. This reverse transmembrane pressure or reverse liquid flow can be applied in a cleaning mode to create a backwash of the membrane 1 to clean the membrane 1 from a dynamic protective layer 7, calcium and/or magnesium particles 6 and/or foulants.

The fouling control means 4 is configured to add calcium and/or magnesium particles 6 and/or a membrane fouling control additive into the liquid to be filtered and/or into the first conduct portion 2. The fouling control means 4 comprises preferably a container or vessel for storing the calcium and/or magnesium particles 6 and/or the membrane fouling control additive. The fouling control means 4 comprises an opening or a connection towards the first conduct portion 2 for adding the calcium and/or magnesium particles 6 and/or the membrane fouling control additive into the liquid to be filtered and/or into the first conduct portion 2. The opening or connection can preferably be opened and closed to control the amount of opening or a connection towards the first conduct portion 2 for adding the calcium and/or magnesium particles 6 and/or the membrane fouling control additive added. Preferably, the fouling control means 4 contains the calcium and/or magnesium particles 6 and/or the membrane fouling control additive.

The membrane fouling control additive is an additive to prevent or control membrane fouling by conditioning the membrane, in particular, by forming a dynamic protective layer 7 of calcium and/or magnesium particles 6 on the membrane 1. The membrane fouling control additive is an additive added during the operation mode of the system/method (not during the cleaning mode). The membrane fouling control additive comprises the calcium and/or magnesium particles 6. The calcium and/or magnesium particles 6 are configured to form the dynamic protective layer 7 on the membrane 1, when the calcium and/or magnesium particles 6 are added in the liquid to be filtered.

The membrane fouling control additive and/or the calcium and/or magnesium particles 6 are preferably in a form of a slurry. The slurry contains preferably a liquid, preferably water, and solid particles (solids). The solids comprise the calcium and/or magnesium particles 6, preferably consist of at least 50 wt% calcium and/or magnesium particles, preferably of at least 60 wt% calcium and/or magnesium particles, preferably of at least 70 wt% calcium and/or magnesium particles, preferably of at least 80 wt% calcium and/or magnesium particles, preferably of at least 90 wt% calcium and/or magnesium particles. Most preferably, the solids are the calcium and/or magnesium particles 6. The solids content and/or the calcium and/or magnesium particles 6 content of the slurry is preferably smaller than 20 weight percent (wt%), preferably smaller than 15 wt%, preferably smaller than 12 wt%. The solids content and/or the calcium and/or magnesium particles 6 content of the slurry is preferably larger than 1 wt%, preferably larger than 2 wt%, preferably larger than 4 wt%, preferably larger than 5 wt%, preferably larger than 6 wt%, preferably larger than 7 wt%.

In an alternative embodiment, the membrane fouling control additive and/or the calcium and/or magnesium particles 6 are carried to the fouling control means 4, filled into the fouling control means 4, stored in the fouling control means 4 and/or added into the first conduct portion 2 and/or the liquid to be filtered in a dry formulation, i.e. as a powder. It is also possible to mix this powder with a liquid to obtain a slurry between one of the mentioned steps, e.g. before or when filling the powder into the fouling control means 4 to add the membrane fouling control additive and/or the calcium and/or magnesium particles 6 as a slurry into the first conduct portion 2 and/or the liquid to be filtered.

In the above-described embodiment, the membrane fouling control additive and/or the calcium and/or magnesium particles 6 are filled in the fouling control means 4 in the same form as they are entered in the first conduct portion 2 and/or into the liquid to be filtered. In an alternative embodiment, one or more raw materials are added to the fouling control means 4 to obtain the membrane fouling control additive and/or the calcium and/or magnesium particles 6 as entered in the first conduct portion 2 and/or into the liquid to be filtered. This can be simply a mixing step for example to mix the membrane fouling control additive and/or the calcium and/or magnesium particles 6 as a powder with a liquid to obtain the above-mentioned membrane fouling control additive and/or the calcium and/or magnesium particles 6 as a slurry.

In one embodiment, the membrane fouling control additive contains the calcium and/or magnesium particles 6 and a dispersant. The dispersant keeps the calcium and/or magnesium particles 6 from agglomerating. The dispersant can be polyether-polycarboxylate dispersants, polyacrylate dispersants or other dispersants.

In one embodiment, fouling control means 4 comprises a calcium and/or magnesium particles manufacturing device for forming the calcium and/or magnesium particles 6 or the membrane fouling control additive in situ by a chemical reaction. Thus, one or more raw materials are inserted in the fouling control means 4, in particular in the calcium and/or magnesium particles manufacturing device to obtain in situ by the chemical reaction the membrane fouling control additive and/or the calcium and/or magnesium particles 6. The membrane fouling control additive and/or the calcium and/or magnesium particles 6 are further fed into the first conduct portion 2 and/or the liquid to be filtered. Preferably, the chemical reaction comprises a gas-liquid reaction. Preferably, the chemical reaction comprises a precipitation to obtain synthetic precipitate particles as calcium and/or magnesium particles.

Preferably, the chemical reaction and/or the precipitation is a carbonation. The result of the carbonation is preferably a synthetic mineral precipitate. The chemical reaction is preferably realized by introducing gaseous carbon dioxide to a milk of calcium/magnesium hydrates under controlled conditions to obtain the final calcium and/or magnesium particles. Like this a synthetic mineral precipitate can be manufactured. The controlled conditions comprise the flow rates of the carbon dioxide, the temperature, the pressure and/or other conditions. The calcium and/or magnesium particles 6 and/or the additive can be manufactured before adding them into the fluid to be filtered.

One embodiment to manufacture for example precipitated calcium carbonate in situ will be described. In the calcium and/or magnesium particles manufacturing device, a milk of lime (slaked lime or calcium dihydrate) having a solid content comprised between 1 and 15 wt% is set at a temperature of 0 to 20°C. A gas mixture containing gaseous carbon dioxide with a volume fraction of 5 to 40%vol is injected under pressure of 0.1 to 0.5 MPa at a gas flow rate comprised between 1 and 5 (normal) ltr $CO_2$/min/ltr suspension. The feed of gaseous carbon dioxide is stopped when a pH of 8,3 or lower is obtained. The resulting suspension comprises at least a precipitated calcium carbonate content of 5 to 20%wt with respect to the total weight of the slurry and a precipitated calcium carbonate content with respect to the total solid content of 95%wt. The resulting suspension is a slurry of calcium and/or magnesium particles which is then further fed in the first conduit 2.

The system is preferably configured to operate in different modes.

In the operation mode, a transmembrane pressure is created over the membrane 1 and/or a liquid flow of the liquid to be filtered is created from the first conduct portion 2 through the membrane 1 into the second conduct portion 3 to obtain the filtered liquid.

In a cleaning mode, the membrane 1 is cleaned from the dynamic protective layer 7, calcium and/or magnesium particles 6 and/or foulants 10. Preferably, the cleaning is realized by a backwash (also called backflush), i.e. the transmembrane pressure and/or the flow direction over the membrane 1 is inverted. Preferably, the filtered liquid is conducted back through the membrane 1 to clean the membrane 1. However, it is also possible to use different cleaning mechanisms for cleaning the membrane 1 from the dynamic protective layer 7, calcium and/or magnesium particles 6 and/or foulants 10. This could be other cleaning mechanisms as the ones mentioned in the introduction. Preferably, the cleaning outlet 9 is opened during the cleaning mode to conduct the cleaning liquid comprising the dynamic protective layer 7, calcium and/or magnesium particles 6 and/or foulants 10 through the cleaning outlet 9 out of the first conduct portion 2. The cleaning outlet control means preferably closes the membrane 1 from the source of the liquid to be filtered so that the liquid to be filtered is not polluted even more. The cleaning outlet control means is preferably configured to close the cleaning outlet 9 during the operation mode. However, in another embodiment it is also possible to conduct the cleaning liquid in the cleaning mode back into the first conduct portion 2. In this case, the cleaning outlet 9 and the cleaning outlet control means are not necessary.

The system is preferably configured to run different filter cycles. Each filter cycle comprises an operation mode and a cleaning mode.

Subsequently, the process for membrane fouling control is explained at the example steps shown in Fig. 2 to 5 which represent one exemplary filter cycle. Subsequently, the calcium and/or magnesium particles 6 and the membrane fouling control additive are for the sake of brevity not mentioned each time as alternatives explicitly, but it shall be clarified that they are always interchangeable in the subsequent text.

Fig. 2 shows the step of adding the calcium and/or magnesium particles 6 into the first conduct portion 2 and/or into the liquid to be filtered. During this step, the system is preferably in the operation mode. During this step, the liquid to be filtered is preferably conducted through the membrane 1. During this step, the liquid in the first conduct portion 2 is conducted through the membrane 1 into the second conduct portion 3. Preferably, the calcium and/or magnesium particles 6 are added such that they are well distributed, preferably equally distributed in the liquid to be filtered, when it arrives at the membrane 1. This can be achieved by adding the calcium and/or magnesium particles 6, where there is a non-laminar flow or where there are turbulences, e.g. in or close to a pump. As described before, preferably the calcium and/or magnesium particles 6 are added in the operation mode, i.e. when the liquid to be filtered is conducted through the membrane 1. However, it may also be possible to add the calcium and/or magnesium particles 6 partly or completely, before starting the flow through the membrane 1. Preferably, the calcium and/or magnesium particles 6 are added at the beginning of the filter cycle, preferably at the beginning of the operation mode to create immediately the dynamic protective layer 7 on the membrane 1 before too much foulants can come into contact with the membrane 1. The calcium and/or magnesium particles 6 are preferably added within a period of the first 120 seconds (sec), preferably of the first 90 sec, preferably of the first 60 sec of the filtration cycle. Preferably, the adding of the calcium and/or magnesium particles 6 and/or of the membrane fouling control additive is interrupted after a sufficient amount of calcium and/or magnesium particles 6 have been added to create the dynamic protective layer 7. E.g. after 30 to 120 sec depending on the concentration of the calcium and/or magnesium particles 6 added into the liquid to be filtered. For some applications, it showed advantageous to start again to add calcium and/or magnesium particles 6 in the operation mode after the adding has been interrupted for a while (not shown in the figures), e.g. at the end of the operation mode. This helped in some applications for the removal of the dynamic protective layer 7 from the membrane 1 in the cleaning mode. In some applications, it showed beneficial to continuously add the calcium and/or magnesium particles 6 during the whole operation mode.

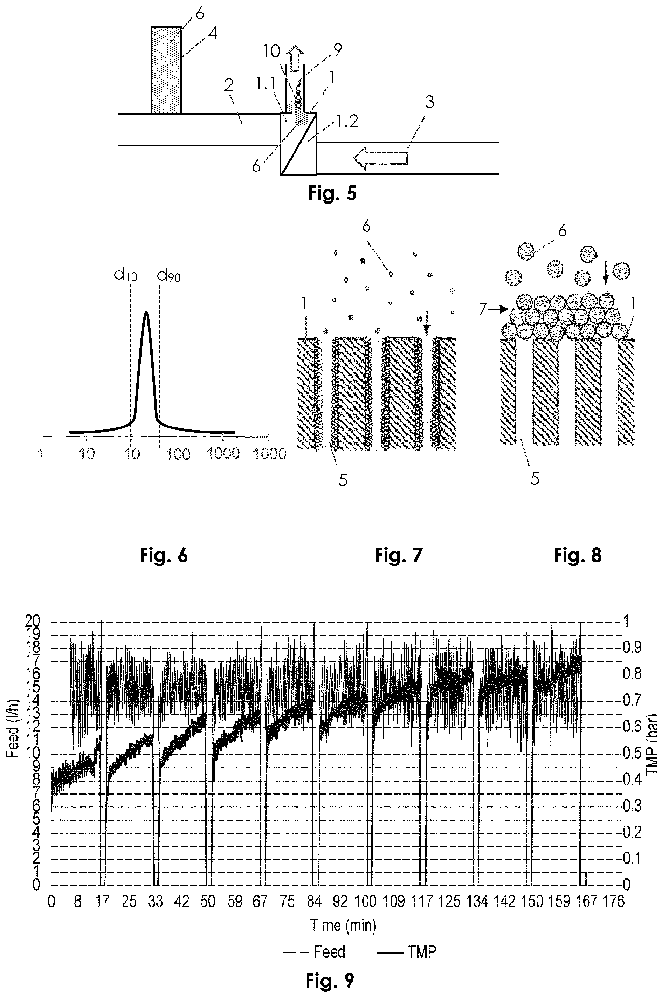

Fig. 3 shows a step of forming the dynamic protective layer 7 on the membrane 7. The dynamic protective layer 7 is formed by the calcium and/or magnesium particles 6 added into the liquid to be filtered. The flow of the liquid to be filtered transports the calcium and/or magnesium particles 6 to the membrane 1 which retains the calcium and/or magnesium particles 6 such that they form the dynamic protective layer 7 similar to a filtration cake (see also Fig. 8). The dynamic protective layer 7 is formed and/or held in place by the transmembrane pressure created by the flow of the liquid to be filtered through the membrane 1. The calcium and/or magnesium particles 6 are configured to form on the membrane 1 a porous dynamic protective layer 7 so that the liquid to be filtered can continue to flow through the dynamic protective layer 7 to the membrane 1 and then through the membrane 1.

The step of adding the calcium and/or magnesium particles 6 and the step of forming the dynamic protective layer 7 happen preferably at least partly overlapping. While the calcium and/or magnesium particles 6 are added in the flow of the liquid to be filtered, the dynamic protective layer 7 is formed on the membrane 1 by the liquid flow and/or the transmembrane pressure. The dynamic protective layer 7 is formed on the first side 1.1 of the membrane 1. The period of adding the calcium and/or magnesium particles 6 and of forming the dynamic protective layer 7 can maybe divided in three periods. A first time period in which the calcium and/or magnesium particles 6 are added into the liquid to be filtered and the calcium and/or magnesium particles 6 added are transported to the membrane 1. A second time period in which the calcium and/or magnesium particles 6 are continued to be added into the liquid to be filtered and the dynamic protective layer 7 starts to be formed on the membrane 1 by the calcium and/or magnesium particles 6 arriving on the membrane 1. In this second time period, the dynamic protective layer 7 continues to grow by the newly added calcium and/or magnesium particles 6. A third time period, in which the addition of the calcium and/or magnesium particles 6 is stopped and the forming of the dynamic protective layer 7 is finished while the calcium and/or magnesium particles 6 remained in the liquid to be filtered are transported to the membrane 1 to be deposited on the dynamic protective layer 7. The third time period is obviously omitted, if the calcium and/or magnesium particles 6 are continuously added over the complete time of the operation mode. It is also understood that the calcium and/or magnesium particles 6 can also deposit not only on the membrane 1, but also on the walls of the first conduct portion 2. Later it will however be described how this can be avoided or reduced best.

The liquid to be filtered and/or the liquid in the first conduct portion 2 into which the calcium and/or magnesium particles 6 are added is preferably the same liquid to be filtered containing the foulants and/or contaminants filtered in the step shown in Fig. 4. This has the advantage that no clean liquid needs to be wasted for depositing/forming the dynamic protective layer 7. However, for certain cases like for very aggressive contaminants and/or foulants which shall at all costs not touch the membrane 1, it would also be possible to use in/during the step(s) of adding the calcium and/or magnesium particles 6 and/or of forming the dynamic protective layer 7 on the membrane 1 for the liquid to be filtered a different liquid than in the step of filtering the liquid to be filtered shown in Fig. 4. This has the advantage that a very clean dynamic protective layer 7 can be formed without any foulants and/or contaminants in between. However, this makes the system for membrane fouling control more complex and increases the waste of clean liquid, and thus in many cases reduces the amount of clean liquid produced by the process.

Fig. 4 shows the step of filtering the liquid to be filtered through the membrane 1 to obtain the filtered liquid and/or the step of conducting the liquid to be filtered from the first conduct portion 2 through the membrane 2 to the second conduct portion 3. The liquid to be filtered needs to traverse first the dynamic protective layer 7 before it traverses the membrane 1. The foulants 10 in the liquid to be filtered are retained by the dynamic protective layer 7 before reaching the membrane 1 and thus preventing membrane fouling of the membrane 1. It is obviously possible that a certain percentage of foulants 10 could pass the dynamic protective layer 7, but in any case, the foulants reaching the membrane 1 is significantly reduced so that membrane fouling is reduced or avoided. The dynamic protective layer 7 can also retain the contaminants of the liquid. The dynamic protective layer 7 can thus be considered like a filtration aid which helps the membrane 1 to filter the liquid to be filtered. The longer the operation mode lasts the more foulants 10 and/or contaminants are retained in the dynamic protective layer 7. Thus, the filtration cake created by the dynamic protective layer 17, the foulants 10 and/or the contaminants grow over time. This reduces the flow rate of the liquid to be filtered through the membrane 1 and/or increases the amount of energy necessary to maintain the same flow rate.

Fig. 5 shows a cleaning step to clean the dynamic protective layer 7 with the retained foulants 10 and/or contaminants. The cleaning step removes/cleans the filtration cake created by the dynamic protective layer 17, the foulants 10 and/or the contaminants. Preferably, the cleaning step creates a cleaning flow of the liquid in the first conduct portion 2 with the filtration cake out of the first conduct portion 2 into a cleaning outlet 9. This cleaning flow is preferably realized by a backwash or backwash operation as shown in Fig. 5 which conducts the filtered liquid from the second conduct portion 3 back through the membrane 1 into the first conduct portion 2. One of the selection criteria for the calcium and/or magnesium particles 6 is the easy cleanability from the membrane 1. Preferably, the cleaning operation is done by a physical cleaning like the backwash. However, it is also possible to use a chemical cleaning step. Most preferably, the cleaning step of the filter cycles are physical cleaning steps and once in a while a chemical cleaning step is used to remove some irreversible fouling created notwithstanding the dynamic protective layer 7. Before starting the cleaning step/mode, the operation mode is preferably ended and the liquid to be filtered is not conducted any more from the first conduct portion 2 to the second conduct portion 3. After the cleaning step/mode has ended, the cleaning outlet 9 is closed. In another less preferred embodiment, it is also possible to conduct the filtration cake back into the first conduct portion 2 instead of out of the cleaning outlet 9. This would avoid the cleaning outlet 9 but would worsen the quality of the liquid to be filtered in the first conduct portion 2. After the cleaning step/mode a new filter cycle can start.

Preferably, the system or process comprises a plurality of subsequent filter cycles as described above.

In one embodiment, the process could comprise the optional step of forming the calcium and/or magnesium particles in situ, before adding them to the liquid to be filtered. This could be achieved by a chemical reaction as explained in more detail above.

In one embodiment, the ultrafine synthetic mineral precipitate particles based on calcium and/or magnesium having a particle size distribution $d_{50}$ lower than or equal to 1 $\mu$m, $d_{90}$ lower than or equal to 10 $\mu$m and a $d_{10}$ comprised between 50 nm and 500 nm. The ultrafine mineral precipitate particles according to the present invention are particularly suitable for ultrafiltration.

In one embodiment, the microfine synthetic mineral precipitate particles based on calcium and/or magnesium having a particle size distribution $d_{50}$ lower than or equal to 5 $\mu$m, $d_{90}$ lower than or equal to 15 $\mu$m and a $d_{10}$ comprised between 200 nm and 3 $\mu$m. The microfine mineral precipitate particles according to the present invention are particularly suitable for microfiltration.

In one embodiment, the $d_{10}$ of the particle size distribution of the calcium and/or magnesium particles for ultrafiltration is greater than or equal to 50 nm, preferably greater than or equal to 70 nm, preferably greater than or equal to 100 nm, preferably greater than or equal to 200 nm.

In one embodiment, the $d_{10}$ of the particle size distribution of the calcium and/or magnesium particles for ultrafiltration is lower than or equal to 500 nm, preferably lower than or equal to 400 nm, preferably lower than or equal to 350 nm, preferably greater than or equal to 320 nm.

In one embodiment, the $d_{10}$ of the particle size distribution of the calcium and/or magnesium particles for microfiltration is greater than or equal to 200 nm, preferably greater than or equal to 250 nm, preferably greater than or equal to 300 nm, preferably greater than or equal to 500 nm.

In one embodiment, the $d_{10}$ of the particle size distribution of the calcium and/or magnesium particles for microfiltration is lower than or equal to 1000 nm, preferably lower than or equal to 900 nm, preferably lower than or equal to 800 nm, preferably lower than or equal to 750 nm.

The smaller the particles are, the more homogenous is the deposition of the calcium and/or magnesium particles 6 to form the dynamic protective layer 7. Preferably, the average particle size of the calcium and/or magnesium particles 6 is larger than 0.05 $\mu$m, preferably than 0.1 $\mu$m, preferably than 0.15 $\mu$m. However, it showed that the average particle size is actually less important than the boundaries of the size distribution like the $d_{10}$ and the $d_{90}$. This is because particles at this average size dimensions tend to have a very broad size distribution. Without controlling the size distribution, the average particle size might not help to reach the function of the aimed average size. Fig. 6 shows an exemplary size distribution with $d_{10}$ and the $d_{90}$ for the calcium and/or magnesium particles 6.

The calcium and/or magnesium particles 6 have preferably a size distribution with a $d_{10}$ larger than the defined pore size of the membrane 1, preferably than twice the defined pore size of the membrane 1, preferably than three times the defined pore size of the membrane 1, preferably than five times the defined pore size of the membrane 1, preferably than seven times the defined pore size of the membrane 1, preferably than nine times the defined pore size of the membrane 1, preferably than ten times the defined pore size of the membrane 1. Fig. 7 and 8 show for illustration purposes a schematic membrane 1 with one single defined pore size and one single fouling control particle 6 size, i.e. with a Dirac distribution of the pore size and of the fouling control particle size. In Fig. 7, it is shown what happens, if the fouling control particle 6 size is smaller than the defined pore size. The calcium and/or magnesium particles 6 enter the pores 5 of the membrane 1 and deposit in the pores 5. This narrows the pores 5 of the membrane 1 and negatively influences the flow of the liquid to be filtered through the membrane 1. This is also called standard blocking in membrane technology. Fig. 8 shows schematically a dynamic protective layer 7 on the membrane 1 which does not block the pores 5, because the calcium and/or magnesium particles 6 do not lead to standard blocking in the pores 5.

The calcium and/or magnesium particles 6 have preferably a size distribution with a $d_{90}$ smaller than 10

$\mu$m, preferably than 5 $\mu$m, preferably than 1 $\mu$m, preferably than 0.5 $\mu$m.

More preferably, in one embodiment, depending on the microfiltration membrane, the $d_{90}$ of the size distribution of the calcium and/or magnesium particles is lower than or equal to 15 $\mu$m, preferably lower than or equal to 10 $\mu$m, preferably lower than or equal to 5 $\mu$m, preferably lower than or equal to 1 $\mu$m, preferably lower than or equal to 0.7 $\mu$m, preferably lower than or equal to 0.5 $\mu$m.

In one embodiment, depending on the ultrafiltration membrane, the $d_{90}$ of the size distribution of the calcium and/or magnesium particles is lower than or equal to 10 $\mu$m, preferably lower than or equal to 5 $\mu$m, preferably lower than or equal to 1 $\mu$m, preferably lower than or equal to 0.7 $\mu$m, preferably lower than or equal to 0.5 $\mu$m.

This helps to guarantee that the calcium and/or magnesium particles 6 form the dynamic protective layer 7 homogenously on the membrane surface. If the $d_{90}$ of the calcium and/or magnesium particles 6 becomes too large, the deposition of the calcium and/or magnesium particles 6 becomes too heterogenous. This disturbs the functioning of the dynamic protective layer 7 and could reduce the operative membrane surface. For example, hollow fiber membranes 1 or tubular membranes 1 provide the membrane surface 1.1 within long hollow fibers or tubes with the pores 5 in the fiber or tube walls. If the calcium and/or magnesium particles 6 have a $d_{90}$ larger than mentioned above, it leads to a heterogeneous deposition of the calcium and/or magnesium particles 6 with the larger particles being mainly concentrated at the end of the tubes or fibers. This leads to an insufficient creation of the dynamic protective layer 7 for effective fouling control at the beginning of the tubes or fibers and a dynamic protective layer 7 at the end of the tubes or fibers which is too thick and blocks the flow through the tubes or fibers and/or through the dynamic protective layer 7 to the pores 5. A small average particle size of the calcium and/or magnesium particles 6 alone does not guarantee a homogenous deposition. If the calcium and/or magnesium particles have a wide size distribution or a large $d_{90}$ they tend to a heterogenous deposition of the calcium and/or magnesium particles 6. A dynamic protective layer 7 made out of heterogeneously deposited calcium and/or magnesium particles 6 blocks the pores 5 of the membrane 1 and reduce the efficiency of the fouling control. Therefore, the calcium and/or magnesium particles 6 having a $d_{90}$ below the above-mentioned values, will significantly improve the quality and performance of the dynamic protective layer 7 for the membrane fouling control of the membrane 1.

The calcium and/or magnesium particles 6 are preferably synthetic precipitate particles. Synthetic precipitate particles have the advantage that their characteristics like size, thermal stability, mechanical stability, polydispersity index, zeta potential, BET surface are and/or maybe others can be well controlled when they are manufactured.

Preferably, the calcium and/or magnesium particles 6 and/or the synthetic precipitate particles comprise/are metal precipitate particles and/or mineral precipitate particles. Preferably, the calcium and/or magnesium particles 6 and/or the synthetic mineral precipitate particles are based on calcium and/or magnesium. This family of mineral precipitates offers tunable and environmentally compatible particles.

In one embodiment, the calcium and/or magnesium particles 6 and/or the synthetic mineral precipitate particles comprise/are precipitated calcium carbonate (PCC).

In one embodiment, the calcium and/or magnesium particles 6 and/or the synthetic mineral precipitate particles comprise/are precipitated hydromagnesite.

In one embodiment, the calcium and/or magnesium particles 6 and/or the synthetic mineral precipitate particles comprise/are mineral composite particles containing a mixed solid phase of two minerals, preferably of calcium and of magnesium, preferably of synthetic calcium carbonate and of synthetic magnesium carbonate, preferably of (synthetic precipitated) calcium carbonate and of (synthetic) hydromagnesite.

Synthetic calcium/magnesium carbonate originates from natural calcium/magnesium carbonates which have been calcined to produce calcium/magnesium oxide by removing $CO_2$ during calcination. Natural calcium carbonate is generally called limestone. Natural magnesium carbonate is generally called magnesite, but can exist under several hydrated forms. Natural calcium-magnesium carbonate is generally called dolomite. When the calcium/magnesium oxide is produced by calcination, it can be further hydrated to form a hydrated form or a slaked form, which can be further carbonated to form precipitates of calcium/magnesium carbonates (under pressure or not). Typically, the molar ratio of calcium to magnesium in natural dolomite is comprised between 0.8 and 1.2. This ratio can be modified by slaking the oxide in the presence of magnesium hydroxide or calcium hydroxide to about 0.1 to 10.

The precipitated calcium/magnesium carbonate can also contain impurities coming from the naturally occurring form. The impurities notably comprise all those which are encountered in natural limestones and dolomites, such as clays of the silico-aluminate type, silica, impurities based on iron or manganese at an amount of maximum 10 wt%, preferably maximum 5 wt%, preferably maximum 1 wt%.

Generally, the $CaCO_3$, $MgCO_3$, $Ca(OH)_2$ and $Mg(OH)_2$ contents in calcium-magnesium compounds may easily be determined with conventional methods.

The composite particle comprises preferably a core of the first mineral material and/or a shell of the second material. Preferably the first mineral material is a mineral precipitate, preferably a calcium-based mineral, preferably a PCC.

The PCC core comprises preferably mainly calcite with some trace of aragonite. Calcite and aragonite are two crystalline structures of calcium carbonate $CaCO_3$.

In another embodiment of the invention, the PCC core may further contain calcium hydroxide $Ca(OH)_2$, e.g. in portlandite form. It is to be noted that the PCC core always has a majority weight proportion of calcite, aragonite or a mixture of both.

PCC can be obtained by controlled carbonation of quicklime as explained before and the literature reported some carbonation of a milk of lime in presence of additives, such as for example for paper manufacturing (see US20189170765).

Preferably, the second mineral material is a magnesium-based material, preferably comprises hydromagnesite, preferably hydromagnesite with only some traces of nesquehonite. Hydromagnesite, also called basic magnesium carbonate has the formula $Mg_5(CO_3)_4(OH)_2 \cdot 4H_2O$ or $4MgCO_3 \cdot Mg(OH)_2 \cdot 4H_2O$. In the International Centre for Diffraction Data database (ICDD), hydromagnesite corresponds to the datasheets carrying references 00-025-0513 (monoclinic) or 01-070-1177 (orthorhombic). In one embodiment, the monoclinic hydromagnesite is used. In another embodiment, the orthorhombic hydromagnesite is used. Hydromagnesite must not be confused with magnesite, a magnesium carbonate of formula $MgCO_3$, or with nesquehonite, a hydrated magnesium carbonate of formula $MgCO_3 \cdot 3H_2O$, which are to be avoided according to the invention.

In one embodiment of the invention, the second mineral material may further contain periclase MgO and/or brucite $Mg(OH)_2$. The proportions of these different components in the second mineral material of the invention, in addition to the synthetic calcium carbonates and hydromagnesite, can be related to the operating conditions and properties of the hydrated dolomite used for the carbonation method allowing the obtaining of the mixed solid phase in the second mineral material according to the invention described below. Fully hydrated dolomite (hydrated under pressure to prevent the residual presence of MgO in the hydrated dolomite) will lead to higher contents of $Mg(OH)_2$ in the mixed solid phase of the second mineral material according to the invention than if a partially hydrated dolomite is used, the latter possibly leading to the presence of MgO in the mixed solid phase of the second mineral material according to the invention.

An example about a way to produce a mineral composition particles containing a mixed solid phase of calcium carbonate and of magnesium carbonate is described in detail in WO2013/139957 and WO2015/039994. According to the state-of-the-art documents, the synthetic mineral precipitate does not present the particle size distribution making the synthetic mineral precipitate suitable for fouling control of membrane and providing the aforementioned advantages. However, according to the present invention, the manufacturing process is adapted by controlling the growth of the mixed solid phase of calcium carbonate in such a way it shows a particle size distribution characterized by $d_{50} < 5$ $\mu$m, $d_{90} < 15$ $\mu$m and a $d_{10}$ comprised between 200 nm and 3 $\mu$m. Optionally, grinding or sieving step can be performed to remove too large particles or concentrate in very fine particles.

Preferably, the calcium and/or magnesium particles containing a mixed solid phase (of calcium carbonate and of magnesium carbonate) comprise PCC as one of the two minerals or the first of the two minerals.

Preferably, the calcium and/or magnesium particles containing a mixed solid phase (of calcium carbonate and of magnesium carbonate) comprise hydromagnesite as one of the two minerals or the second of the two minerals.

Such a mixed solid phase has a further unexpected advantage in that its specific surface area is larger than that of usual synthetic calcium carbonates which have a specific surface area in the order of 4 to 15 m$^2$/g. In one advantageous embodiment of the present invention, the mixed solid phase has a specific surface area of 15 m$^2$/g or larger, more particularly larger than 20 m$^2$/g and preferably 25 m$^2$/g or larger, possibly reaching 35 m$^2$/g. By "specific surface area" used in the present invention is meant the specific surface area measured by manometric nitrogen adsorption and calculated using the Brunauer, Emmett and Teller model (BET method) after degassing at 190° C.

The mixed solid phase present preferably a bulk density equal to or lower than 250 kg/m$^3$ and equal to or higher than 80 kg/m$^3$ measured in accordance with standard EN 459.2

The calcium and/or magnesium particles are in one embodiment inert, like for PCC or precipitated hydromagnesite or for other inert mineral precipitates. In another embodiment, the calcium and/or magnesium particles are reactive or functionalized. The composite particles described before are preferably functionalized.

The proposed solutions target to enhance the hydraulic performance and rejection capacity of membrane 1 by applying a dynamic protective layer on the surface of the membrane 1 at each filtration cycle, preferably at its start. The dynamic protective layer will act as a filtration aid to help control flow through the membranes. The dynamic protective layer consists of preferably of particles of ultrafine precipitated calcium carbonate (i.e., nano-PCC). The dynamic protective layer forms a porous layer on the membrane surface and becomes the filtering medium that traps the solids and prevents them from fouling the membrane surface and pores. Dynamic protective layer filtration is principally mechanical, not chemical in nature; particles interlace and overlay leaving a large network of interstitial void space that can allow the flow of water.

The proposed invention of membrane pretreatment was tested against water pretreatment based on a coagulation solution (i.e., using FeCl$_3$ for pretreatment of the liquid to be filtered). For all experiments, canal water collected from Arquennes was used as liquid to be filtered. A lab-scale membrane module based on an ultrafiltration membrane 1 was used for the testing. The molecular weight cut-off (MWCO) of the membrane 1 used was 150 kDa, i.e. a defined pore size of 0.02 $\mu$m. The surface area for filtration was approximately 0.08 m$^2$. Filtration was performed in a dead-end mode for 10 consecutive cycles of filtration and backwash. Filtration flux was set at a constant rate of 190 dm$^3$/(m$^2$.h) (dm$^3$ per square meter per hour) for a duration of 15 minutes per cycle. After each filtration cycle, a backwash step was performed at a flux of 250 dm$^3$/(m$^2$.h) for 1 minute. Fig. 9 shows the result of the coagulation solution, while Fig. 10 shows the result of the solution proposed by the present invention. The transmembrane pressure (TMP) was recorded throughout the consecutive cycles as an operational indicator of membrane performance and is plotted in Fig. 9 and 10. The second Y-axis on the right shows the TMP in bar (lower curve). At the end of 10 consecutive cycles of filtration and backwash, a chemically enhanced backwash step was performed using caustic soda, oxidant and acid, followed by rinsing with demineralized water. Each chemical was introduced into the membrane system at 250 dm$^3$/(m$^2$.h) for a duration of 1 minute, followed by soaking for 10 minutes and rinsing with demineralized water for 1 minute. The first Y-axis on the left shows the feed volume per hour in dm$^3$/h (or litres per hour - l/h upper curve).

The coagulant solution was established by treating the liquid to be filtered with an equivalent concentration of 1 mgFe$^{3+}$/dm$^3$. The coagulant was added to the feed tank and mixing was applied at 350 rpm for 1 minute to ensure rapid dispersion of coagulant and destabilization of colloids / particulate matter in the liquid to be filtered. Thereafter a slow mixing intensity of 50 rpm was applied for the remaining duration of the testing. Results are illustrated in Fig. 10. The TMP begins at 0.35 bar at the start of the experiment and climbs up to a value of 0.85 bar after 10 consecutive cycles of filtration and backwash. Hydraulic backwashing is not sufficient to recover the TMP at the end of each cycle.

The experiment based on the solution according to the invention was performed using as calcium and/or magnesium particles 6 ultrafine PCC of a $d_{10}$ of the size distribution of the calcium and/or magnesium particles of 0.08 $\mu$m and a $d_{90}$ of the size distribution of the calcium and/or magnesium particles 6 of 0.15 $\mu$m. The PCC stock solution was diluted to a solids concentration of 0.5% and stirred continuously at 50 rpm to avoid sedimentation. The calcium and/or magnesium particles 6 were introduced into liquid to be filtered at the start of each filtration cycle via the feed line. Thereafter, canal water was filtered through the membrane for 15 minutes and the cycle was ended by a backwash to remove the PCC dynamic protective layer 7 and the foulants 10. Chemically enhanced backwash was performed after 10 filtration cycles. Results are given in Fig. 10. The TMP is approximately constant throughout the duration of the experiment at 0.45 bar. Pressure increase during a filtration cycle is minimal and the permeability can almost be completely recovered at the end of the cycle. This allows to make significantly longer filtration cycles and to significantly increase the number of filtration cycles with a physical cleaning before a chemical cleaning is needed. This reduces power needed for establishing the TMP, increases operation time of the membrane 1 and reduces the amount of chemicals needed for cleaning.

Another experiment was performed with the following experimental protocol. Surface water membrane filtration experiments were performed on an automated pilot, where feed, permeate, retentate and backwash valves and pumps are automatically switched. Continuous readings of flow rates and pressures were performed. An ultrafiltration membrane module with a total surface of 0.8 m$^2$ was used for these experiments with a defined pore size of 30 nm. The quality of the surface water used has been characterized by a pH of 8, a conductivity of 670 $\mu$S/cm, a DOC of 9 mg/L, a TOC of 12 mg/L, a Ca$^{2+}$ of 97 mg/L, a Mg$^{2+}$ of 10 mg/L and an Alkalinity of 5 mmol/L. A total of 7 cycles was performed per PCC product (315 min). With the pressure readings, transmembrane pressure (TMP) was calculated, as well as permeability, K (Flux = 82.5 L/m$^2$.h for these experiments). Permeability variation across the test (dK/dt) was measured for a duration of 6 cycles (270 min), taking permeability at the beginning of cycles 1 and 7. Each filter cycle comprises around 45 min of operation mode and subsequently a cleaning mode. Considering a critical permeability value (K$_{critical}$) of 150 L/m$^2$h (value below which a chemical backwash is needed to continue operation), the chemically enhanced backwash frequency (CEB$_F$) was calculated. The higher this value, the better the filtration performance.

Trans-membrane pressure:

$$TMP\,[bar] = P_{feed} - P_{permeate}$$

Permeability:

$$K\left[\frac{L}{m^2.h.bar}\right] = \frac{Flux}{TMP} = \frac{Q}{A \times TMP}$$

$$CEBF\,[h] = \frac{K_{initial} - K_{critical}}{\dfrac{dK}{dt}}$$

These parameters have been used for the following four measurements.

In a first measurement, a PCC suspension at 0.6 wt% solid content was prepared, put under agitation, and injected onto the membrane surface with a dosing of 25 mg solids/L of filtered water at the beginning of the operation mode of the filter cycle, resulting in a PCC dynamic protective layer 7 thickness of 0.58 $\mu$m (first portion of the operation mode). This was followed by a surface water filtration cycle of 45 min (second portion of the operation mode), at the end of which the membrane was backwashed with permeate water (cleaning mode). At that moment, the PCC layer (sacrificial layer) was washed out together with any contaminants. The PCC particles used had a d10 of 0.05 $\mu$m, a d50 of 0.07 $\mu$m and a d90 of 0.12 $\mu$m.

In a second measurement, the same PCC suspension was mixed at the beginning in the feed water corresponding to the same amount of membrane fouling control additive added less concentrated and more continuously over the complete operation mode as it is done in the state of the art for the purpose of coagulation OR feed water conditioning (not shown).

In a third measurement, the same experiment has been performed without any fouling control particles added.

In a fourth measurement, a state-of-the-art PCC has been used injected on the membrane 1 as in the first measurement (not shown).

Fig. 12 shows the TMP 16 over time for the first measurement and the TMP 15 over time for the third measurement. It can be clearly seen that without the PCC dynamic protective layer 7, the TMP of the third measurement 15 increases much more each cycle than the TMP of the first measurement 16 with the dynamic protective layer 7. The CEB$_F$ frequency was calculated for the measurement 16 with 29 hours while it was only 8-9 hours for the third measurement 15. Also, the CEB$_F$ for the second measurement was only 15h. That means that the continuous injection of the fouling control particles has a reduced effect compared to a concentrated injection at the beginning of the operation mode. The state-of-the-art PCC showed only a CEB$_F$ of 11h and performed thus much worse than the PCC in the inventive value ranges of the particle distribution.

## Claims

1. Process for membrane fouling control comprising the steps of:

    • conducting a liquid to be filtered through a membrane (1),
    • adding a membrane fouling control additive including fouling control particles (6) upstream of the membrane (1) into the liquid to be filtered, the fouling control particles (6) added into the liquid to be filtered having a particle size distribution d$_{10}$ larger than a defined pore size of the membrane (1) and forming a dynamic protective layer (7) directly against the membrane (1), wherein the dynamic protective layer (7) is a porous layer which allows the liquid to be filtered to pass through to the membrane (1), and such that, when the liquid to be filtered contains foulants (10), the foulants (10) are retained in the dynamic protective layer (7) before the liquid is conducted through the membrane (1),

**characterized in that** the membrane fouling control additive is a calcium and/or magnesium additive wherein particles (6) comprise synthetic mineral precipitate particles based on calcium and/or magnesium carbonate chosen amongst ultrafine synthetic mineral precipitate particles and microfine synthetic mineral precipitate particles, wherein the ultrafine synthetic mineral precipitate particles have a particle size distribution $d_{50}$ lower than or equal to 1 $\mu$m, a particle size distribution $d_{90}$ lower than or equal to 10 $\mu$m and a particle size distribution $d_{10}$ comprised between 50 nm and 500 nm, wherein the microfine synthetic mineral precipitate particles have a particle size distribution $d_{50}$ lower than or equal to 5 $\mu$m, a particle size distribution $d_{90}$ lower than or equal to 15 $\mu$m and a particle size distribution $d_{10}$ comprised between 200 nm and 3 $\mu$m, wherein the synthetic mineral precipitate particles have a polydispersity value obtained from number-based distributions greater than or equal to 0.1 and smaller than or equal to 1.5 and wherein the synthetic mineral precipitate particles have a specific surface area measured by nitrogen adsorption manometry and calculated according to the BET method larger than or equal to 15 $m^2/g$, the polydispersity being calculated according to the formula $(d_{90}-d_{10}/d_{50}$, the particle size distribution $d_{90}$, $d_{10}$, $d_{50}$ referring to a number-based particle size distribution and being measured according to the standard ISO13320:2020(E), item 5 by laser light scattering of the fouling control particles dispersed in water and by reference to the details in the specification.

2. Process according to claim 1, wherein the synthetic mineral precipitate particles comprises composite particles comprising a first mineral based on calcium carbonate and a second mineral based on hydromagnesite.

3. Process according to the previous claim, wherein the composite particles comprise a core of the first mineral and a shell of the second mineral.

4. Process according to any of the previous claims, wherein the synthetic mineral precipitate particles based on calcium and/or magnesium have an absolute value of the zeta potential smaller than or equal to 50 mV, preferably smaller than or equal to 45 mV, more preferably smaller than or equal to 40 mV, the zeta potential being measured according to the experimental procedure detailed in the description.

5. Process according to any of the previous claims, wherein the additive is in a form of a slurry with a synthetic mineral precipitate particles content between 1.5 wt% and 15 wt%.

6. Process according to any of the claims 1 to 4 wherein the additive is in the form of a powder.

7. Process according to any of the claims 1 to 6 wherein the ultrafine particles are ultrafiltration fouling control particles having a particle size distribution $d_{50}$ smaller than or equal to 0.8 $\mu$m, preferably smaller than or equal to 0.5 $\mu$m, more preferably smaller than or equal to 0.3 $\mu$m and preferably higher than or equal to 0.1 $\mu$m, more preferably higher than or equal to 0.15 $\mu$m, more preferably higher than or equal to 0.2 $\mu$m.

8. Process according to any of the claims 1 to 6 wherein the microfine particles are microfiltration fouling control particles having a particle size distribution $d_{50}$ smaller than or equal to 3 $\mu$m, more preferably smaller than or equal to 2 $\mu$m and preferably higher than or equal to 0.6 $\mu$m, more preferably higher than or equal to 0.8 $\mu$m, more preferably higher than or equal to 1.2 $\mu$m.

9. System for membrane fouling control comprising:

   • a first conduct portion (2);
   • a second conduct portion (3);
   • a membrane (1) arranged between the first conduct portion (2) and the second conduct portion (3) to filter a liquid by conducting it from the first conduct portion (2) to the second conduct portion (3); and
   • a fouling control means (4) filled with a membrane fouling control additive with fouling control particles (6) having a particle size distribution $d_{10}$ larger than a defined pore size of the membrane (1) and configured for adding the membrane fouling control additive in the first conduct portion (2) so that a dynamic protective layer (7) is formed directly against the membrane (1) by the fouling control particles (6) for protecting the membrane (1) from foulants (10), wherein the dynamic protective layer (7) is a porous layer which allows the liquid to be filtered to pass through to the membrane (1);

   **characterized in that** the membrane fouling control additive is a calcium and/or magnesium additive, wherein particles (6) comprise synthetic mineral precipitate particles based on calcium and/or magnesium carbonate chosen amongst ultrafine synthetic mineral precipitate particles and microfine synthetic mineral precipitate particles, wherein the ultrafine synthetic mineral precipitate particles have a particle size distribution $d_{50}$ lower than or equal to 1 $\mu$m, a particle size distribution $d_{90}$ lower than or equal to 10 $\mu$m and a particle size distribution $d_{10}$ comprised

between 50 nm and 500 nm, wherein the microfine synthetic mineral precipitate particles have a particle size distribution $d_{50}$ lower than or equal to 5 $\mu$m, a particle size distribution $d_{90}$ lower than or equal to 15 $\mu$m and a particle size distribution $d_{10}$ comprised between 200 nm and 3 $\mu$m, wherein the synthetic mineral precipitate particles have a polydispersity value obtained from number-based distributions greater than or equal to 0.1 and smaller than or equal to 1.5 and wherein the synthetic mineral precipitate particles have a specific surface area measured by nitrogen adsorption manometry and calculated according to the BET method larger than or equal to 15 $m^2$/g, the polydispersity being calculated according to the formula $(d_{90}-d_{10})/d_{50}$, the particle size distribution $d_{90}$, $d_{10}$, $d_{50}$ referring to a number-based particle size distribution and being measured according to the standard ISO13320:2020(E), item 5 by laser light scattering of the fouling control particles dispersed in water and by reference to the details in the specification.

**Patentansprüche**

1.  Verfahren zur Kontrolle der Membranverschmutzung, das folgende Schritte umfasst:

    • Durchleiten einer zu filternden Flüssigkeit durch eine Membran (1),
    • Zugeben eines Additivs zur Kontrolle der Membranverschmutzung, das Partikel (6) zur Kontrolle der Verschmutzung enthält, stromaufwärts der Membran (1) in die zu filternde Flüssigkeit, wobei die in die zu filternde Flüssigkeit zugegebenen Verschmutzungskontrollpartikel (6) eine Partikelgrößenverteilung $d_{10}$ aufweisen, die größer ist als eine definierte Porengröße der Membran (1) und eine poröse dynamische Schutzschicht (7) direkt gegen die Membran (1) bilden, so dass, wenn die zu filternde Flüssigkeit Verschmutzungen (10) enthält, die Verschmutzungen (10) in der dynamischen Schutzschicht (7) zurückgehalten werden, bevor die Flüssigkeit durch die Membran (1) geleitet wird,

    **dadurch gekennzeichnet, dass** das Membranverschmutzungskontrolladditiv ein Calcium- und/oder Magnesiumadditiv ist, wobei die Partikel (6) synthetische mineralische Fällungspartikel auf der Basis von Calcium- und/oder Magnesiumcarbonat umfassen, die aus ultrafeinen synthetischen mineralischen Fällungspartikeln und mikrofeinen synthetischen mineralischen Fällungspartikeln ausgewählt sind, wobei die ultrafeinen synthetischen mineralischen Fällungspartikel eine Partikelgrößenverteilung $d_{50}$ kleiner oder gleich 1 $\mu$m, eine Partikelgrößenverteilung $d_{90}$ kleiner oder gleich 10 $\mu$m und eine Partikelgrö-

ßenverteilung $d_{10}$ zwischen 50 nm und 500 nm aufweisen, wobei die mikrofeinen synthetischen mineralischen Fällungspartikel eine Partikelgrößenverteilung $d_{50}$ kleiner oder gleich 5 $\mu$m, eine Partikelgrößenverteilung $d_{90}$ kleiner oder gleich 15 $\mu$m und eine Partikelgrößenverteilung $d_{10}$ zwischen 200 nm und 3 $\mu$m aufweisen, wobei die synthetischen mineralischen Fällungpartikel einen Polydispersitätswert aufweisen, der aus zahlenbasierten Verteilungen erhalten wird, die größer oder gleich 0,1 und kleiner oder gleich 1,5 sind, und wobei die synthetischen mineralischen Fällungspartikel eine durch Stickstoffadsorptionsmanometrie gemessene und nach dem BET-Verfahren berechnete spezifische Oberfläche von größer oder gleich 15 $m^2$/g aufweisen, wobei die Polydispersität nach der Formel $(d_{90}-d_{10})/d_{50}$ berechnet wird, wobei sich die Partikelgrößenverteilung $d_{90}$, $d_{10}$, $d_{50}$ auf eine zahlenbasierte Partikelgrößenverteilung bezieht und gemäß der Norm ISO13320:2020(E), Punkt 5 durch Laserlichtstreuung der in Wasser dispergierten Verschmutzungskontrollpartikel gemessen wird und unter Bezugnahme auf die Angaben in der Spezifikation gemessen wird.

2.  Verfahren nach einem der vorhergehenden Ansprüche, wobei die synthetischen mineralischen Fällungpartikel Verbundpartikel umfassen, die ein erstes Mineral auf der Basis von Calciumcarbonat und ein zweites Mineral auf der Basis von Hydromagnesit umfassen.

3.  Verfahren nach dem vorhergehenden Anspruch, wobei die Verbundpartikel einen Kern aus dem ersten Mineral und eine Hülle aus dem zweiten Mineral umfassen.

4.  Verfahren nach einem der vorhergehenden Ansprüche, wobei die synthetischen mineralischen Fällungpartikel auf der Basis von Calcium und/oder Magnesium einen Absolutwert des Zetapotentials kleiner oder gleich 50 mV, vorzugsweise kleiner oder gleich 45 mV, bevorzugt kleiner oder gleich 40 mV aufweisen, wobei das Zetapotential nach dem in der Beschreibung angegebenen experimentellen Verfahren gemessen wird.

5.  Verfahren nach einem der vorhergehenden Ansprüche, wobei der Zusatzstoff in Form einer Aufschlämmung mit einem Gehalt an synthetischen mineralischen Fällungpartikel zwischen 1,5 Gew.-% und 15 Gew.-% vorliegt.

6.  Verfahren nach einem der Ansprüche 1 bis 4, wobei der Zusatzstoff in Form eines Pulvers vorliegt.

7.  Verfahren nach einem der Ansprüche 1 bis 6, wobei die ultrafeinen Partikel Ultrafiltrationsverschmut-

zungskontrollpartikel mit einer Partikelgrößenverteilung $d_{50}$ kleiner oder gleich 0,8 $\mu$m, vorzugsweise kleiner oder gleich 0,5 $\mu$m, besonders bevorzugt kleiner oder gleich 0,3 $\mu$m und vorzugsweise größer oder gleich 0,1 $\mu$m, besonders bevorzugt größer oder gleich 0,15 $\mu$m, besonders bevorzugt größer oder gleich 0,2 $\mu$m sind.

8. Verfahren nach einem der Ansprüche 1 bis 6, wobei die mikrofeinen Partikel Mikrofiltrationsverschmutzungskontrollpartikel mit einer Partikelgrößenverteilung $d_{50}$ kleiner oder gleich 3 $\mu$m, besonders bevorzugt kleiner als oder gleich 2 $\mu$m und vorzugsweise größer oder gleich 0,6 $\mu$m, besonders bevorzugt größer oder gleich 0,8 $\mu$m, besonders bevorzugt größer oder gleich 1,2 $\mu$m sind.

9. System zur Kontrolle der Membranverschmutzung, das umfasst:

> • einen ersten Leitungsabschnitt (2);
> • einen zweiten Leitungsabschnitt (3);
> • eine Membran (1), die zwischen dem ersten Leitungsabschnitt (2) und dem zweiten Leitungsabschnitt (3) angeordnet ist, um eine Flüssigkeit zu filtern, indem sie diese von dem ersten Leitungsabschnitt (2) zu dem zweiten Leitungsabschnitt (3) leitet; und
> • ein Verschmutzungskontrollmittel (4), das mit einem Membranverschmutzungskontrolladditiv mit Verschmutzungskontrollpartikeln (6) gefüllt ist, die eine Partikelgrößenverteilung $d_{10}$ aufweisen, die größer als eine definierte Porengröße der Membran (1) ist, und das zum Hinzufügen des Membranverschmutzungskontrolladditivs in den ersten Leitungsabschnitt (2) konfiguriert ist. so dass eine poröse dynamische Schutzschicht (7) direkt gegen die Membran (1) durch die Verschmutzungskontrollpartikel (6) zum Schutz der Membran (1) vor Verschmutzungen (10) gebildet wird;

> **dadurch gekennzeichnet, dass** das Membranverschmutzungskontrolladditiv ein Calcium- und/oder Magnesiumadditiv ist, wobei die Partikel (6) synthetische mineralische Fällungspartikel auf der Basis von Calcium- und/oder Magnesiumcarbonat umfassen, die aus ultrafeinen synthetischen mineralischen Fällungspartikeln und mikrofeinen synthetischen mineralischen Fällungspartikeln ausgewählt sind, wobei die ultrafeinen synthetischen mineralischen Fällungspartikel eine Partikelgrößenverteilung $d_{50}$ kleiner oder gleich 1 $\mu$m, eine Partikelgrößenverteilung $d_{90}$ kleiner oder gleich 10 $\mu$m und eine Partikelgrößenverteilung $d_{10}$ zwischen 50 nm und 500 nm aufweisen, wobei die mikrofeinen synthetischen mineralischen Fällungspartikel eine Partikelgrößenverteilung $d_{50}$ kleiner oder gleich 5 $\mu$m, eine Partikelgrößenverteilung $d_{90}$ kleiner oder gleich 15 $\mu$m und eine Partikelgrößenverteilung $d_{10}$ zwischen 200 nm und 3 $\mu$m aufweisen, wobei die synthetischen mineralischen Fällungpartikel einen Polydispersitätswert aufweisen, der aus zahlenbasierten Verteilungen erhalten wird, die größer oder gleich 0,1 und kleiner oder gleich 1,5 sind, und wobei die synthetischen mineralischen Fällungspartikel eine durch Stickstoffadsorptionsmanometrie gemessene und nach dem BET-Verfahren berechnete spezifische Oberfläche von größer oder gleich 15 m$^2$/g aufweisen, wobei die Polydispersität nach der Formel $(d_{90}\text{-}d_{10})/d_{50}$ berechnet wird, wobei sich die Partikelgrößenverteilung $d_{90}$, $d_{10}$, $d_{50}$ auf eine zahlenbasierte Partikelgrößenverteilung bezieht und gemäß der Norm ISO13320:2020(E), Punkt 5 durch Laserlichtstreuung der in Wasser dispergierten Verschmutzungskontrollpartikel gemessen wird und unter Bezugnahme auf die Angaben in der Spezifikation gemessen wird.

**Revendications**

1. Procédé de lutte contre l'encrassement de membrane, comprenant les étapes suivantes :

> • l'acheminement d'un liquide à filtrer à travers une membrane (1),
> • l'ajout d'un additif de lutte contre l'encrassement de membrane comprenant des particules de lutte contre l'encrassement (6) en amont de la membrane (1) dans le liquide à filtrer, les particules de lutte contre l'encrassement (6) ajoutées dans le liquide à filtrer présentant une distribution de taille de particule $d_{10}$ supérieure à une taille de pore définie de la membrane (1) et formant une couche protectrice dynamique (7) directement contre la membrane (1), ladite couche protectrice dynamique (7) étant une couche poreuse permettant au liquide à filtrer de traverser la membrane (1), et telle que, lorsque le liquide à filtrer contient des agents d'encrassement (10), les agents d'encrassement (10) sont retenus dans la couche protectrice dynamique (7) avant que le liquide soit acheminé à travers la membrane (1),

> **caractérisé en ce que** l'additif de lutte contre l'encrassement de membrane est un additif au calcium et/ou au magnésium dans lequel les particules (6) comprennent des particules de précipité minéral synthétique à base de carbonate de calcium et/ou de magnésium choisies parmi des particules de précipité minéral synthétique ultrafines et des particules de précipité minéral synthétique microfines, dans lequel les particules de précipité minéral synthétique ultrafines présentent une distribution de

taille de particule $d_{50}$ inférieure ou égale à 1 $\mu$m, une distribution de taille de particule $d_{90}$ inférieure ou égale à 10 $\mu$m et une distribution de taille de particule $d_{10}$ comprise entre 50 nm et 500 nm, dans lequel les particules de précipité minéral synthétique microfines présentent une distribution de taille de particule $d_{50}$ inférieure ou égale à 5 $\mu$m, une distribution de taille de particule $d_{90}$ inférieure ou égale à 15 $\mu$m et une distribution de taille de particules $d_{10}$ comprise entre 200 nm et 3 $\mu$m, dans lequel les particules de précipité minéral synthétique présentent une valeur de polydispersité obtenue à partir de distributions basées sur le nombre supérieur ou égale à 0,1 et inférieure ou égale à 1,5 et dans lequel les particules de précipité minéral synthétique présentent une surface spécifique mesurée par manométrie d'adsorption d'azote et calculée selon la méthode BET supérieure ou égale à 15 m$^2$/g, la polydispersité étant calculée selon la formule $(d_{90}-d_{10})/d_{50}$, la distribution de taille de particule $d_{90}$, $d_{10}$, $d_{50}$ faisant référence à une distribution de taille de particule basée sur le nombre et étant mesurée selon la norme ISO13320:2020(E), point 5 par diffusion de lumière laser des particules de lutte contre l'encrassement dispersées dans l'eau et en référence aux détails de la spécification.

2. Procédé selon la revendication 1, dans lequel les particules de précipité minéral synthétique comprennent des particules composites comprenant un premier minéral à base de carbonate de calcium et un deuxième minéral à base d'hydromagnésite.

3. Procédé selon la revendication précédente, dans lequel les particules composites comprennent un noyau du premier minéral et une enveloppe du deuxième minéral.

4. Procédé selon l'une quelconque des revendications précédentes, dans lequel les particules de précipité minéral synthétique à base de calcium et/ou de magnésium présentent une valeur absolue du potentiel zêta inférieure ou égale à 50 mV, de préférence inférieure ou égale à 45 mV, plus préférablement inférieure ou égale à 40 mV, le potentiel zêta étant mesuré selon la procédure expérimentale détaillée dans la description.

5. Procédé selon l'une quelconque des revendications précédentes, dans lequel l'additif se présente sous la forme d'une suspension ayant une teneur en particules de précipité minéral synthétique entre 1,5 % en poids et 15 % en poids.

6. Procédé selon l'une quelconque des revendications 1 à 4, dans lequel l'additif se présente sous la forme d'une poudre.

7. Procédé selon l'une quelconque des revendications 1 à 6, dans lequel les particules ultrafines sont des particules de lutte contre l'encrassement par ultrafiltration présentant une distribution de taille de particule $d_{50}$ inférieure ou égale à 0,8 $\mu$m, de préférence inférieure ou égale à 0,5 $\mu$m, plus préférablement inférieure ou égale à 0,3 $\mu$m et préférablement supérieure ou égale à 0,1 $\mu$m, plus préférablement supérieure ou égale à 0,15 $\mu$m, plus préférablement supérieure ou égale à 0,2 $\mu$m.

8. Procédé selon l'une quelconque des revendications 1 à 6, dans lequel les particules microfines sont des particules de lutte contre l'encrassement par microfiltration présentant une distribution de taille de particule $d_{50}$ inférieure ou égale à 3 $\mu$m, plus préférablement inférieure ou égale à 2 $\mu$m et préférablement supérieure ou égale à 0,6 $\mu$m, plus préférablement supérieure ou égale à 0,8 $\mu$m, plus préférablement supérieure ou égale à 1,2 $\mu$m.

9. Système de lutte contre l'encrassement de membrane comprenant :

   • une première portion d'acheminement (2) ;
   • une deuxième portion d'acheminement (3) ;
   • une membrane (1) agencée entre la première portion d'acheminement (2) et la deuxième portion d'acheminement (3) pour filtrer un liquide en l'acheminant à partir de la première portion d'acheminement (2) vers la deuxième portion d'acheminement (3) ; et
   • un moyen de lutte contre l'encrassement (4) rempli d'un additif de lutte contre l'encrassement de membrane avec des particules de lutte contre l'encrassement (6) présentant une distribution de taille de particule $d_{10}$ supérieure à une taille de pore définie de la membrane (1) et configuré pour ajouter l'additif de lutte contre l'encrassement de membrane dans la première portion d'acheminement (2) de sorte qu'une couche protectrice dynamique (7) est formée directement contre la membrane (1) par les particules de lutte contre l'encrassement (6) afin de protéger la membrane (1) des agents d'encrassement (10), dans lequel la couche protectrice dynamique (7) est une couche poreuse permettant au liquide à filtrer de traverser la membrane (1) ;

   **caractérisé en ce que** l'additif de lutte contre l'encrassement de membrane est un additif au calcium et/ou au magnésium, dans lequel les particules (6) comprennent des particules de précipité minéral synthétique à base de carbonate de calcium et/ou de magnésium choisies parmi des particules de précipité minéral synthétique ultrafines et des particules de précipité minéral synthétique microfines, dans lequel les particules de précipité minéral synthétique ultrafines présentent une distribution de taille de particule $d_{50}$ inférieure ou égale à 1 $\mu$m, une distribution de taille de particule $d_{90}$ inférieure ou égale à 10 $\mu$m et une distribution de taille de particule $d_{10}$ comprise entre 50 nm et 500 nm, dans lequel les particules de précipité minéral synthétique microfines présentent une distribution de taille de particule $d_{50}$ inférieure ou égale à 5 $\mu$m, une distribution de taille de particule $d_{90}$ inférieure ou égale à 15 $\mu$m et une distribution de taille de particule $d_{10}$ comprise entre 200 nm et 3 $\mu$m, dans lequel les particules de précipité minéral synthétique présentent une valeur de polydispersité obtenue à partir de distributions basées sur le nombre supérieure ou égale à 0,1 et inférieure ou égale à 1,5 et dans lequel les particules de précipité minéral synthétique présentent une surface spécifique mesurée par manométrie d'adsorption d'azote et calculée selon la méthode BET supérieure ou égale à 15 m$^2$/g, la polydispersité étant calculée selon la formule $(d_{90}-d_{10})/d_{50}$, la distribution de taille de particule $d_{90}$, $d_{10}$, $d_{50}$ faisant référence à une distribution de taille de particule basée sur le nombre et étant mesurée selon la norme ISO13320:2020(E), point 5, par diffusion de lumière laser des particules de lutte contre l'encrassement dispersées dans l'eau et en référence aux détails de la spécification.

Fig. 1

Fig. 2

Fig. 3

Fig. 4

**Fig. 5**

**Fig. 6**        **Fig. 7**        **Fig. 8**

— Feed    — TMP

**Fig. 9**

Fig. 10

| defined pore size / nm | MWCO / kDa | membrane type |
|---|---|---|
| 0.1 | 0.75 | Reverse osmosis |
| 2.0 | 15 | nanofiltration |
| 6.3 | 47 | nanofiltration |
| 10 | 75 | ultrafiltration |
| 20 | 150 | ultrafiltration |
| 63 | 473 | ultrafiltration |
| 100 | 750 | ultrafiltration |
| 200 | 1496 | microfiltration |
| 631 | 4732 | microfiltration |
| 1000 | 7500 | microfiltration |

Fig. 11

Fig. 12

## REFERENCES CITED IN THE DESCRIPTION

**Patent documents cited in the description**

- EP 1920821 A
- WO 2001027036 A1
- WO 2002044091 A2
- WO 2017009792 A1
- US 20150044469 A
- US 20180170765 A
- US 20189170765 A
- WO 2013139957 A
- WO 2015039994 A